(19) Europäisches Patentamt
European Patent Office
Office européen des brevets

(11) Veröffentlichungsnummer : **0 097 290**
**B1**

(12) **EUROPÄISCHE PATENTSCHRIFT**

(45) Veröffentlichungstag der Patentschrift : **03.04.85**

(21) Anmeldenummer : **83105683.3**

(22) Anmeldetag : **10.06.83**

(51) Int. Cl.[4] : **C 07 C 85/20**, C 07 C125/06, C 07 D251/34, C 08 G 65/32, C 07 C127/24, C 08 G 63/76, C 08 G 18/32

(54) **Einstufenverfahren zur Herstellung von Polyaminen aus NCO-Prepolymeren, Polyamine und deren Verwendung zur Herstellung von Polyurethanen.**

(30) Priorität : **23.06.82 DE 3223397**

(43) Veröffentlichungstag der Anmeldung : **04.01.84 Patentblatt 84/01**

(45) Bekanntmachung des Hinweises auf die Patenterteilung : **03.04.85 Patentblatt 85/14**

(84) Benannte Vertragsstaaten : **AT BE CH DE FR GB IT LI NL SE**

(56) Entgegenhaltungen :
**AT-B- 262 970**
**DE-A- 2 447 748**
**DE-A- 2 703 313**
**DE-A- 2 948 419**

(73) Patentinhaber : **BAYER AG**
**Konzernverwaltung RP Patentabteilung**
**D-5090 Leverkusen 1 Bayerwerk (DE)**

(72) Erfinder : **Rasshofer, Werner, Dr.**
**Wolfskaul 10**
**D-5000 Koeln 80 (DE)**
Erfinder : **Dieterich, Dieter, Dr.**
**Ludwig-Girtler-Strasse 1**
**D-5090 Leverkusen (DE)**

**EP 0 097 290 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein vereinfachtes Einstufenverfahren zur Herstellung von Polyaminen mit aromatischen und/oder aliphatischen primären Aminogruppen, vorzugsweise aromatischen Aminogruppen, durch Hydrolyse von endständige Isocyanatgruppen aufweisenden Verbindungen mit einem NCO-Gehalt von 0,5 bis 40 Gew.-% mit äquivalenten oder überschüssigen Mengen Wasser in Gegenwart von Katalysatoren aus der Reihe der Carbonate, Hydrogencarbonate oder carbonsauren Salze, vorzugsweise mit Alkaliionen, in Gegenwart von wasserlöslichen Lösungsmitteln wie Dioxan oder Dimethylformamid bei vorzugsweise erhöhten Reaktionstemperaturen. Als Isocyanatgruppen aufweisende Verbindungen werden modifizierte Isocyanate oder NCO-Prepolymere bzw. Semiprepolymere eingesetzt. Die Hydrolyse führt unter Kohlendioxidabspaltung direkt zu den Polyaminen, die nach üblichen Methoden abgetrennt oder isoliert werden können.

Es ist bekannt, daß aromatische Isocyanate durch saure Hydrolyse in primäre aromatische Amine überführt werden können. Die Reaktion verläuft allerdings nur sehr unvollständig, da das bei der Hydrolyse gebildete Amin mit noch nicht umgesetztem Isocyanat zum entsprechenden Harnstoff weiterreagiert. Diese Folgereaktion läßt sich auch durch Anwendung überschüssiger starker Mineralsäure nicht unterdrücken. Ein neueres Beispiel dieser Verfahrensweise findet sich in der JP-PS 55 007 827.

In der DE-B 1 270 046 wird ein Verfahren zur Herstellung definierter, Polyalkylenglykolether-Segmente enthaltender, primärer aromatischer Amine beschrieben, bei dem man Umsetzungsprodukte von aromatischen Di- oder Triisocyanaten mit Polyalkylenglykolethern und/oder Polyalkylenglykolthioethern, vorzugsweise solchen mit Molekulargewichten zwischen 400 und 4 000, mit sekundären oder tertiären Carbinolen umsetzt und anschließend (gegebenenfalls in Gegenwart saurer Katalysatoren) in einem inerten Lösungsmittel einer thermischen Spaltung bei hohen Temperaturen unterwirft. Nachteilig ist dabei neben der hohen Spalttemperatur, daß im Verlauf der thermischen Spaltung der Urethane brennbare, leicht flüchtige Alkene entstehen, die im Gemisch mit Luft explosiv sind, so daß entsprechende Vorsichtsmaßnahmen getroffen werden müssen.

Gegenstand der DE-B 1 694 152 ist die Herstellung von mindestens 2 endständige Aminogruppen aufweisenden Prepolymeren durch Umsetzung von Hydrazin, Aminophenylethylamin oder anderen Diaminen mit einem NCO-Prepolymer aus einem Polyetherpolyol und Polyisocyanat (NCO : NH-Verhältnis = 1 : 1,5 bis 1 : 5). Nicht umgesetztes Amin muß dabei in einem weiteren Schritt sorgfältig entfernt werden, da es die Umsetzung mit Polyisocyanaten stark katalysiert, so zu kurzen Verarbeitungszeiten führt und auch selbst als Reaktionspartner auftritt.

Eine andere Synthesemöglichkeit für Urethangruppen aufweisende Polyamine wird in der FR-PS 1 415 317 beschrieben. Urethangruppenhaltige NCO-Prepolymere werden mit Ameisensäure in die N-Formylderivate überführt, die zu endständigen aromatischen Aminen verseift werden. Auch die Reaktion von NCO-Prepolymeren mit Sulfaminsäure nach DE-A 1 155 907 führt zu Verbindungen mit endständigen Aminogruppen. Desweiteren werden höhermolekulare, aliphatische, sekundäre und primäre Aminogruppen aufweisende Voraddukte nach DE-B 1 215 373 durch Umsetzung höhermolekularer Hydroxylverbindungen mit Ammoniak in Gegenwart von Katalysatoren unter Druck bei hohen Temperaturen erhalten oder sind gemäß US-PS 3 044 989 durch Umsetzung höhermolekularer Polyhydroxylverbindungen mit Acrylnitril unter anschließender katalytischer Hydrierung zugänglich. Auch durch Umsetzung von NCO-Prepolymeren mit Hydroxylgruppen aufweisenden Enaminen, Aldiminen oder Ketiminen und anschließende Hydrolyse erhält man gemäß DE-A 2 546 536 bzw. US-PS 3 865 791 höhermolekulare, endständige Aminogruppen und Urethangruppen aufweisende Verbindungen. Eine weitere Synthesemöglichkeit für Urethan- und Ethergruppen aufweisende aromatische Polyamine liegt in der bei der Reaktion von Isatosäureanhydrid und Diolen eintretenden Ringöffnung. Solche Polyamine sind z. B. beschrieben in der US-PS 4 180 644 und den DE-A 2 019 432, 2 619 840, 2 648 774 und 2 648 825. Nachteilig für viele Zwecke ist die geringe Reaktivität der solcherart erhaltenen, aromatischen Esteramine.

Auch die Reaktion von Nitroarylisocyanaten mit Polyolen und nachfolgender Reduktion der Nitrogruppen zu aromatischen Amingruppen ist bekannt (US-PS 2 888 439).

Nachteilig sind hier vor allem die hohen Kosten des Reduktionsschrittes.

Es ist auch bekannt, daß gewisse heteroaromatische Isocyansäureester durch basische Hydrolyse in heteroaromatische Amine überführt werden können. Die bei H. John, J. Prakt. Chemie *130,*314 f bzw. 332 f (1931) für zwei ganz bestimmte, heteroaromatische Monoisocyansäureester genannten Hydrolysebedingungen sind aber für die Überführung von Poly-NCO-Verbindungen in aliphatische und/oder aromatische Amine nicht nur völlig ungeeignet, sondern darüber hinaus auch gefährlich.

Gegenstand eigener Vorschläge nach den DE-A 29 48 419.3 und 30 39 600.0 sind mehrstufige Verfahren zur Herstellung von Polyaminen durch alkalische Hydrolyse von NCO-Voraddukten mittels überschüssiger Basenmengen (Alkalihydroxide) bei niedrigen Temperaturen zu Carbamaten, Ansäuern mit äquivalenten oder über die Basenmenge hinaus überschüssiger Mengen an Mineralsäuren oder Ionenaustauscherharzen unter Carbamatzersetzung, gegebenenfalls Neutralisation überschüssiger Säuremengen mittels Basen und anschließende Isolierung der Polyamine.

Die hier beschriebenen Verfahren zur Herstellung von Polyaminen sind alle aufwendig. Selbst bei dem zuletztgenannten, bereits einfacheren Verfahren zur Umwandlung von Polyisocyanaten in Polyamine wäre noch eine weitere entscheidende Vereinfachung wünschenswert, um zu Polyaminen in wirtschaftlich noch günstigerer Weise zu gelangen. Ein wesentlicher Vorteil wäre dabei in einem Einstufenverfahren gegenüber den bisherigen Mehrstufenverfahren zu sehen, ferner im Wegfall gebildeter Salze und der weitgehenden Vermeidung eines Filtrationsschrittes.

Bisher blieben alle Versuche erfolglos, in befriedigenden Ausbeuten Polyamine durch direkte Verseifung von Polyisocyanaten in einem Einstufenverfahren zu erhalten. Statt der gewünschten Verseifungsprodukte werden nur Harnstoffgruppen aufweisende, kaum mehr fließfähige, teilweise inhomogene Produkte erhalten, welche entweder gar keine oder nur äußerst wenig Aminogruppen aufweisen (s. auch Vergleichsbeispiele). Der Grund könnte darin bestehen, daß die Isocyanat-Amin-Reaktion wesentlich schneller ist als die Isocyanat-Wasser-Reaktion. Aus diesem Grunde wurden die Hydrolysereaktionen mittels Alkalihydroxidkatalyse bisher bei möglichst tiefen Temperaturen durchgeführt und die zwangsläufig entstehenden Alkalicarbamate nachträglich durch Säure oder thermisch zersetzt.

Völlig überraschend wurde nun gefunden, daß die einstufige Hydrolyse von Polyisocyanaten doch direkt zu Polyaminen führt, wenn in Gegenwart relativ schwach basischer Verbindungen wie z. B. alkalicarbonaten, Alkalihydrogencarbonaten oder Alkalicarboxylaten wie z. B. Kaliumacetat, und in Gegenwart von wasserlöslichen Lösungsmitteln wie Dioxan, Tetrahydrofuran, Dimethylformamid oder Acetonitril gearbeitet wird, wobei man bei möglichst erhöhten Temperaturen arbeiten muß, z. B. bei 60 bis 165 °C, bzw. den Siedepunkten des Lösemittel-Wassergemisches, um die Harnstoffbildung zu unterdrükken. Bei niedrigeren Temperaturen, z. B. Raumtemperatur, entstehen mit den Carbonaten und anderen erfindungsgemäß verwendbaren schwach basischen Verbindungen überraschend mehr Harnstoffgruppierungen, als bei den hohen Temperaturen. Es war sehr unerwartet, daß die Harnstoffbildung unter den erfindungsgemäßen Bedingungen der höheren Temperaturen weitestgehend unterdrückt wird, da bei diesen höheren Temperaturen im Falle der vorveröffentlichten Alkalihydroxidkatalyse diese zu einem starken Anstieg der Harnstoffbildung führt.

Entsprechend dem erfindungsgemäßen Verfahren werden wasserlösliche Lösungsmittel eingesetzt, um eine im wesentlichen homogene Lösung der Reaktionsteilnehmer NCO-Verbindung und Wasser sowie des Katalysators zu erzielen. Eines der besonders geeigneten Lösungsmittel ist dabei das Dimethylformamid.

Es ist aus der DE-AS 1 235 499 bekannt, Lösungen von NCO-Prepolymeren in Dimethylformamid mit etwa äquivalenten Mengen Wasser (80 bis 120 % der Theorie) unter Kettenverlängerung über Harnstoffgruppen in hochviskose Lösungen, welche zur Erspinnung von Elasthanfäden oder für Beschichtungen geeignet sind, zu überführen. Die hiervon unterschiedliche Reaktion der NCO-Verbindungen mit überschüssigen Mengen an Wasser unter Bildung praktisch niedermolekularer Amine war überraschend, insbesondere auch in Gegenwart der erfindungsgemäßen Katalysatoren der Carbonat-, Hydrogencarbonat- und Carbonsäure-Alkalisalzreihe, da diese Verbindungen im allgemeinen als Isocyanattrimerisierungskatalysatoren wirken können.

Ferner ist bekannt, daß Isocyanate mit Dialkylformamiden zu Formamidinen reagieren (H. Ulrich et al, J. Org. Chem. *33,* 3928-3930 (1968)). Auch diese Reaktion stört nicht bei der glatten Hydrolysereaktion zu den Polyaminen nach dem erfindungsgemäßen Verfahren.

Ein erheblicher Vorteil des Verfahrens wird darin gesehen, daß bei den erfindungsgemäßen Katalysatoren keine Salzbildung mit dem abgespaltenen $CO_2$ eintritt, wie dies bei den Alkalihydroxiden beispielsweise der Fall ist, oder aber überhaupt nicht stört, da ein solches Reaktionsprodukt gleichermaßen katalytische Aktivität aufweist (z. B. bei Hydrogencarbonat-Bildung). So können die verwendeten Katalysatoren in Lösung oder nach Abfiltrieren beliebig wiederverwendet werden. Die Entfernung der Katalysatoren kann dabei vorzugsweise leicht durch Abfiltrieren aus dem Reaktionsansatz oder den Polyaminen erfolgen. Aufwendige Destillationsvorgänge sind nicht erforderlich. Nebenprodukt der Hydrolysereaktion ist lediglich gasförmiges Kohlendioxid.

Das Verfahren mit den erfindungsgemäßen Katalysatoren ist auch besonders gut für die Hydrolyse von NCO-Prepolymeren auf Basis von Polyestern geeignet, da die schonenden Reaktionsbedingungen nicht zu einer Spaltung der Estergruppierung während der Hydrolysereaktion in nennenswertem Ausmaße führen. Die erfindungsgemäß zu verwendenden Katalysatoren stellen technisch leicht zugängliche, wohlfeile Katalysatoren dar, die gegebenenfalls nach Abtrennung wiederverwendet werden können. Diese Katalysatoren zeigen auch weniger Wechselwirkung mit alkalisch hydrolysierbaren Lösungsmitteln wie Dimethylformamid. Bei Verwendung von stark basischen Alkalihydroxiden tritt dagegen eine deutliche Hydrolyse von z. B. Dimethylformamid ein.

Gegenstand der Erfindung ist somit ein Verfahren zur Herstellung von Polyaminen mit primären Aminogruppen durch Hydrolyse von NCO-Gruppen aufweisenden Verbindungen in wäßrigen alkalischen Medien,

dadurch gekennzeichnet, daß man in einem Einstufen-Verfahren

a) NCO-Gruppen aufweisende Verbindungen, vorzugsweise mit aromatisch gebundenen NCO-Gruppen, mit einem Gehalt von 0,5 bis 40 Gew.-%, vorzugsweise 1,2 bis 25 Gew.-% und besonders bevorzugt 1,5 bis 15 Gew.-% NCO,

b) mit überschüssigen Mengen an Wasser von mindestens 2 Äquivalenten, vorzugsweise mehr als 10 Äquivalenten, Wasser pro Äquivalent NCO-Gruppe in a),

c) in Gegenwart von Alkali-Carbonaten oder -Hydrogencarbonaten Alkali- und Erdalkalisalzen von Mono- oder Polycarbonsäuren, in Mengen von 0,01 bis 25 Gew.-%, bezogen auf a), bevorzugt in Mengen von 1 bis 200 g, vorzugsweise 2 bis 50 g und besonders bevorzugt 5 bis 30 g Katalysator pro Äquivalent NCO in a),

d) in Gegenwart von wassermischbaren, polaren Lösungsmitteln, bevorzugt mit Carbonsäuredialkylamid-, Lactam-, Tetraalkylharnstoff-, Sulfon-, Sulfoxid-, Phosphordialkylamid-, Nitril-, Keton- und Ether-Gruppen, besonders bevorzugt Carbonsäuredialkylamid-, Ether- und Nitril-Gruppen, in Mengen von ⩾ 10, vorzugsweise ⩾ 20 Gew.-Teilen, besonders bevorzugt ⩾ 40 Gew.-Teile d), bezogen auf 100 Teile a), unter Aufrechterhaltung einer im wesentlichen homogenen Reaktionsmischung bei einer Temperatur zwischen 50 und 165 °C, vorzugsweise 80 bis 130 °C, hydrolysiert.

Bei dem Verfahren werden besonders bevorzugt pro 60 Teile a) mindestens 40 Teile b) bis d) eingesetzt und eine homogene Reaktionsphase in der Mischung von a), b) und d) bei den gewählten Reaktionstemperaturen aufrechterhalten. Auch der Katalysator c) ist vorzugsweise homogen in der Reaktionsphase gelöst, kann jedoch nur teilweise gelöst sein, wie aus den Beispielen hervorgeht.

Ebenfalls Gegenstand der Erfindung ist gegebenenfalls die Mitverwendung untergeordneter Mengen von 0,1 bis 5 Gew.-% einer Verbindung f) mit einer, zwei oder mehreren, an aliphatische, cycloaliphatische oder aromatische Reste gebundenen Hydroxy- und/oder Amino- und/oder Thiolgruppen. Die Mitverwendung dieser « H-aktive Gruppen » enthaltende Verbindungen führt zu folgenden Vorteilen : Aus niedermolekulare Polyisocyanate enthaltenden NCO-Verbindungen, z. B. NCO-Semiprepolymeren, lassen sich ohne Behandlung der NCO-Verbindungen durch Dünnschichten oder ähnliche Verfahren Polyamine herstellen, die praktisch frei von monomerem Polyamin sind. Es lassen sich so in einfacher Weise und in einem verbundenen Reaktionsschritt auch modifizierte Polyamine, die in einem Molekül zusätzlich über Urethangruppen, Thiourethangruppen oder Harnstoffgruppen verknüpfte Polyaminsegemente, gegebenenfalls unterschiedlicher Art, besitzen, herstellen.

Aus einer z. B. difunktionellen NCO-Verbindung läßt sich durch Verwendung einer tri- oder höherfunktionellen, « H-aktiven Gruppe » besitzenden Verbindung bei der NCO-Hydrolyse so ein tri- oder höherfunktionelles Polyamin gewinnen.

Gegenstand der Erfindung sind ferner Polyamine mit 0,19 bis 20,3, vorzugsweise 0,46 bis 11,3, besonders bevorzugt 0,58 bis 6,7, Gew.-% an primären Aminogruppen, hergestellt nach dem angegebenen Verfahren. Polyamine mit aromatisch gebundenen primären Aminogruppen aus NCO-Verbindungen mit aromatisch gebundenen NCO-Gruppen sind dabei bevorzugt ; ganz besonders bevorzugt sind Polyamine aus NCO-Verbindungen auf der Basis von Toluylendiisocyanaten.

Gegenstand der Erfindung ist ferner die Verwendung der nach dem Verfahren zugänglichen Polyamine zur Herstellung von Polyurethanen, gegebenenfalls zellförmigen Polyurethankunststoffen und Polyurethanschaumstoffen durch Umsetzung von

A) Polyisocyanaten und/oder blockierten Polyisocyanaten (einschließlich der NCO-Prepolymeren), mit

B) Polyaminen sowie gegebenenfalls

C) weiteren, niedermolekularen und/oder höhermolekularen Verbindungen mit gegenüber Isocyanaten reaktiven Gruppen, gegebenenfalls

D) in Anwesenheit an sich bekannter Hilfs- und Zusatzstoffe und/oder Lösungsmittel,

dadurch gekennzeichnet, daß als Komponente B) die nach dem erfindungsgemäßen Verfahren hergestellten Polyamine eingesetzt werden.

Die zwei oder mehrere, aromatische, heterocyclische und/oder aliphatische, vorzugsweise aromatische, NCO-Gruppen aufweisenden, im erfindungsgemäßen Verfahren einsetzbaren NCO-Verbindungen a), im folgenden auch kurz « NCO-Verbindungen » genannt, stellen entweder modifizierte Polyisocyanate dar, wie sie durch teilweise Umwandlung der Isocyanatgruppen in Urethan-, Harnstoff-, Biuret-, Uretdion-, Isocyanurat- und/oder Uretonimingruppen entstehen,

oder sind sogenannte NCO-Prepolymere aus gegenüber NCO-Gruppen reaktive H-Gruppen tragenden, mehrwertigen Verbindungen des Molekulargewichts 62 bis 12 000, vorzugsweise 400 bis 6 000, und (überschüssigen) Mengen an aromatischen Polyisocyanaten oder sind gegebenenfalls Semiprepolymere aus NCO-Prepolymeren und zusätzlichen niedermolekularen Polyisocyanaten.

Als modifizierte aromatische Polyisocyanate sind beispielsweise geeignet :

Urethangruppen-haltige Polyisocyanate (durch Modifizierung mit niedermolekularen Polyolen entstanden), Harnstoffgruppen aufweisende Polyisocyanate (Wassermodifizierung, DE-PS 1 230 778), Biuretgruppen aufweisende Polyisocyanate (US-PS 3 124 605, 3 201 372, GP-PS 889 050), Isocyanuratgruppen aufweisende Polyisocyanate (DE-PS' en 1 022 789 und 1 222 067) sowie Uretdion- oder Uretonimingruppen enthaltende, dimere oder oligomere Polyisocyanate sind bekannte Verbindungen oder nach bekannten Verfahren zugänglich. Eine Reihe solcher Uretdionpolyisocyanate ist in Analytical Chemistry of the Polyurethanes, Band 16/III, High-Polymers-Series (Wiley 1969) aufgeführt.

Solche modifizierten Polyisocyanate mit Urethan- und/oder Harnstoff- und/oder Biuret- und/oder Uretdion- und/oder Isocyanurat- und/oder Uretonimin-Gruppen, wie sie im erfindungsgemäßen Verfahren einsetzbar sind, haben üblicherweise einen NCO-Gehalt von 5 bis 40 Gew.-%, bevorzugt 10 bis 25 Gew.-%.

Die im erfindungsgemäßen Verfahren einzusetzenden NCO-Verbindungen a) sind besonders jedoch NCO-Prepolymere, wie sie in an sich bekannter Weise durch Umsetzung von niedermolekularen und/oder

höhermolekularen Hydroxy- und/oder Amino- und/oder Thiolgruppen als reaktive Gruppen enthaltenden Verbindungen (Molekulargewicht 62 bis ca. 12 000) mit einem Überschuß an Polyisocyanaten entstehen.

Als Polyisocyanate zur Herstellung der freie NCO-Gruppen aufweisenden Verbindungen kommen im Prinzip beliebige, aromatische, aliphatische und heterocyclische Polyisocyanate infrage, wie sie z. B. von W. Siefken in Justus Liebigs Annalen der Chemie, 562, S. 75-136, beschrieben werden, beispielsweise solche der Formel Q $(NCO)_n$, in der n = 2 bis 4, vorzugsweise 2 und Q einen Kohlenwasserstoffrest mit 4 bis 15, einen aromatischen Kohlenwasserstoffrest mit 6 bis 15, vorzugsweise 6 bis 13 C-Atomen, bedeuten, z. B. 1,3- und 1,4-Phenylendiisocyanat, 2,4- und 2,6-Toluylendiisocyanat, sowie beliebige Gemische dieser Isomeren, Diphenylmethan-2,4'- und/oder -4,4'- und/oder -2,2'-diisocyanate, einschließlich der Alkyl- und Chlor-substituierten Derivate und Naphthylen-1,5-diisocyanat. Geeignete Diisocyanate sind auch die in DE-A 2 922 966 beschriebenen 2,4'-Diisocyanatodiphenylsulfide und die in z. B. EP 24 665 und DE-A 2 935 318 beschriebenen alkylsubstituierten Diphenylmethandiisocyanate. Auch aliphatische und/oder cycloaliphatische Polyisocyanate wie 1,6-Hexandiisocyanat, Lysinmethylesterdiisocyanat, Isophorondiisocyanat, die Dicyclohexylmethandiisocyanatisomeren oder biurethaltige oder isocyanurathaltige, etwa trifunktionelle Polyisocyanate auf Basis Hexan-1,6-diisocyanat oder Isophorondiisocyanat können zur Anwendung kommen.

Ferner kommen beispielsweise in Frage : Triphenylmethan-4,4',4''-triisocyanat, Polyphenyl-polymethylen-polyisocyanate, wie sie durch Anilin-Formaldehyd-Kondensation und anschließende Phosgenierung erhalten und z. B. in den GB-PS' en 874 430 und 848 671 beschrieben werden, m- und p-Isocyanatophenylsulfonyl-isocyanate gemäß der US-PS 3 454 606, perchlorierte Arylpolyisocyanate, wie sie z. B. in der DE-Auslegeschrift 1 157 601 (US-PS 3 277 138) beschrieben werden, Isocyanuratgruppen aufweisende Polyisocyanate, wie sie z. B. in der US-PS 3 001 973, in den DE-PS' en 1 022 789, 1 222 067 und 1 027 394 sowie in den DE-PS' en 1 929 034 und 2 004 048 beschrieben werden, Urethangruppen aufweisende Polyisocyanate, wie sie z. B. in der BE-PS 752 261 oder in den US-PS' en 3 394 164 und 3 644 457 beschrieben werden, acylierte Harnstoffgruppen aufweisende Polyisocyanate gemäß der DE-PS 1 230 778 sowie durch Telomerisationsreaktionen hergestellte Polyisocyanate, wie sie z. B. in der US-PS 3 654 196 beschrieben werden. Ferner sind Diarylalkylendiisocyanate, welche durch Polymerisation von Acrylnitril und gegebenenfalls weiteren ethylenisch ungesättigten Monomeren in den Diarylalkylendiisocyanaten nach dem Verfahren der EP-A 37 112 (US-PS 4 283 500) erhalten werden, einsetzbar.

Bevorzugt werden in der Regel die technisch leicht zugänglichen Polyisocyanate, z. B. das 2,4- und 2,6-Toluylendiisocyanat sowie beliebige Gemische dieser Isomeren (« TDI »), Polyphenyl-polymethylen-polyisocyanate, wie sie durch Anilin-Formaldehyd-Kondensation und anschließende Phosgenierung hergestellt werden (« rohes MDI »), sowie Urethangruppen, Isocyanuratgruppen oder Harnstoffgruppen aufweisende Polyisocyanate (« modifizierte Polyisocyanate »). Besonders bevorzugt werden die modifizierten Polyisocyanate, die sich vom 2,4- und/oder 2,6-Toluylendiisocyanat (TDI) bzw. vom 4,4'- und/oder 2,4' und/oder 2,2'-Diphenylmethandiisocyanat (MDI) ableiten. Technisch ist die Verwendung von TDI und MDI (oder ihren Isomergemischen) zur NCO-Prepolymerherstellung am bedeutsamsten.

Für die Herstellung der NCO-Prepolymeren werden vorzugsweise höhermolekulare Verbindungen mit einem Molekulargewicht von 400 bis 12 000, insbesondere 400 bis 6 000, eingesetzt, welche mindestens 1,9, vorzugsweise 2 bis 4, insbesondere 2 bis 3, reaktive Hydroxyl-, Amino- und/oder Thiolgruppen (bevorzugt Hydroxylgruppen) als reaktive Gruppen pro Mol aufweisen. In Frage kommen beispielsweise die in der Polyurethanchemie üblichen, gegenüber Isocyanaten reaktive Gruppen tragenden Polyacetale, Polythioether, Polycarbonate, Polyamide, Polysiloxane und/oder Polybutadiene, besonders Polyester, Polylactone sowie Polyether ; insbesondere aber Hydroxylgruppen tragende Polyether.

Die erfindungsgemäß bevorzugten, mindestens zwei, in der Regel zwei bis acht, vorzugsweise zwei bis drei, Hydroxylgruppen aufweisenden Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Ethylenglykol, Propandiol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyether sowie auf Formit oder Formose gestartete Polyether kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen.

Auch OH-, NH- und/oder SH-Gruppen aufweisende Polybutadiene sind erfindungsgemäß geeignet (s. Progress Org. Coatings, Band 7 (3), 289-329 (1979)).

Als Polyacetale kommen z. B. die aus Glykolen, wie Di- oder Tri-ethylenglykol, 4,4'-Dihydroxyethoxydiphenylmethan, Hexandiol und Formaldehyd oder durch Polymerisation cyclischer Acetale, wie z. B. Trioxan, herstellbaren Verbindungen in Frage.

Als Hydroxylgruppen aufweisende Polycarbonate kommen solche der an sich bekannten Art in Betracht, die z. B. durch Umsetzung von Diolen wie Propandiol-1,3, Butandiol-1,4 und/oder Hexandiol-1,6, Di-, Tri- oder Tetraethylenglykol oder Thiodiglykol mit Diarylcarbonaten, z. B. Diphenylcarbonat, oder Phosgen hergestellt werden können (DE-B 1 694 080, 1 915 908 und 2 221 751 ; DE-A 2 605 024).

Als Polyester aus Dicarbonsäuren und Diolen kommen vorzugsweise solche aus Adipinsäure und (weniger bevorzugt) Isophthalsäure und geradkettigen und/oder verzweigten Diolen in Betracht, ebenso Lactonpolyester, vorzugsweise auf Basis von Caprolacton und Starterdiolen.

Unter den Polythioethern seien insbesondere die Kondensationsprodukte von Thiodiglykol mit sich selbst und/oder mit anderen Glykolen angeführt.

Auch bereits Urethan- oder Harnstoffgruppen enthaltende Polyhydroxylverbindungen sowie gegebenenfalls modifizierte natürliche Polyole sind verwendbar. Auch Anlagerungsprodukte von Alkylenoxiden an Phenol-Formaldehyd-Harze oder auch an Harnstoff-Formaldehyd-Harze sind erfindungsgemäß einsetzbar. Es ist auch möglich, z. B. gemäß DE-A 2 559 372, in die Polyhydroxylverbindungen Amidgruppen einzuführen.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) in situ in den o.g., Hydroxylgruppen aufweisenden Verbindungen ablaufen läßt. Derartige Verfahren sind beispielsweise in den DE-B 1 168 075 und 1 260 142, sowie den DE-A 2 324 134, 2 423 984, 2 512 385, 2 513 815, 2 550 796, 2 550 797, 2 550 833, 2 55 862, 2 633 293 und 2 639 254 beschreiben. Es ist aber auch möglich, gemäß US-PS 3 869 413 bzw. 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z. B. durch Polymerisation von Styrol und Acrylnitril in Gegenwart von Polyethern (US-PS 3 383 351, 3 304 273, 3 523 093, 3 110 695 ; DE-B 1 152 536) oder Polycarbonatpolyolen (DE-PS 1 769 795 ; US-PS 3 637 909) erhalten werden, sind für das erfindungsgemäße Verfahren geeignet.

Vertreter der genannten erfindungsgemäß zu verwendenden Verbindungen sind z. B. in High Polymers, Vol. XVI, « Polyurethanes, Chemistry and Technology », verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z. B. auf den Seiten 45-71, beschrieben. Selbstverständlich können Mischungen der o.g. Verbindungen mit mindestens zwei gegenüber Isocyanaten reaktionsfähigen Wasserstoffatomen mit einem Molekulargewicht von 400 bis 12 000, z. B. Mischungen von verschiedenen Polyethern, eingesetzt werden.

Für die Herstellung des im erfindungsgemäßen Verfahren einzusetzenden NCO-Prepolymeren kommen, gegebenenfalls nur anteilweise, als Ausgangskomponenten auch Verbindungen mit mindestens zwei gegenüber Isocyanaten reaktionsfähigen Wasserstoffatomen und einem Molekulargewicht von 18 bis 399, vorzugsweise 62 bis 399, in Betracht. Auch in diesem Fall versteht man hierunter Wasser und/oder Hydroxylgruppen und/oder Aminogruppen und/oder Thiolgruppen, vorzugsweise Hydroxylgruppen aufweisende Verbindungen, wie sie als Kettenverlängerungsmittel oder Vernetzungsmittel aus der Polyurethanchemie an sich bekannt sind. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 62 bis 399 verwendet werden.

Als Beispiele für derartige Verbindungen seien genannt : Wasser, Ethylenglykol, Propandiol-(1,2) und -(1,3), Butandiol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Di-brombutendiol, Glyzerin, Trimethylolpropan, Hexantriol-(1,2,6), Trimethylolethan, Pentaerythrit, Chinit, Mannit und Sorbit, Dianhydrosorbit und Dianhydromannit, Ricinusöl, Di-, Tri- und Tetraethylenglykol, Di-, Tri- und Tetrapropylenglykol, Dibutylenglykol und höhere Polyethylen-, Polypropylen- oder Polybutylenglykole mit einem Molekulargewicht bis 399, 4,4'-Dihydroxy-diphenylpropan, Di-hydroxyethyl-hydrochinon, Ethanolamin, Diethanolamin, N-Methyldiethanolamin, Triethanolamin und 3-Aminopropanol.

Als niedermolekulare Polyole kommen auch die Gemische von Hydroxyaldehyden und Hydroxyketonen (« Formose ») bzw. die hieraus durch Reduktion erhaltenen mehrwertigen Alkohole (« Formit ») in Frage, wie sie bei der Selbstkondensation von Formaldehydhydrat entstehen (DE-A 2 639 084, 2 714 084).

Erfindungsgemäß geeignete aliphatische Diamine sind beispielsweise Ethylendiamin, 1,4-Tetramethylendiamin, 1,6-Hexamethylendiamin, 1,12-Dodecamethylendiamin sowie deren Gemische, 1-Amino-3,3,5-trimethyl-5-amino-methylcyclohexan (« Isophorondiamin »), 2,4- und 2,6-Hexahydrotoluylendiamin sowie deren Gemische, Perhydro-2,4' und -4,4'-diaminodiphenylmethan, p-Xylylendiamin, Bis-(3-aminopropyl)-methylamin, Diamino-perhydroanthrazene und cycloaliphatische Triamine gemäß DE-A 2 614 244. Auch Hydrazin und substituierte Hydrazine, z. B. Methylhydrazin oder Dihydrazidverbindungen, kommen erfindungsgemäß in Betracht.

Als Beispiele für aromatische Diamine seien die Ethergruppen aufweisenden Diamine gemäß DE-A 1 770 525 und 1 809 172 (US-PS' en 3 654 364 und 3 736 295), gegebenenfalls in 5-Stellung substituierte 2-Halogen-1,3-phenylendiamine (DE-A 2 001 772, 2 025 896 und 2 065 869), 3,3'-Dichlor-4,4'-diaminodiphenylmethan, Toluylendiamin, 4,4'-Diaminodiphenylmethan, 4,4'-Diaminodiphenyldisulfide (DE-A 2 404 976), Diaminodiphenyldithiœther (DE-A 2 509 404), durch Alkylthiogruppen substituierte aromatische Diamine (DE-A 2 638 760), Sulfonat- oder Carboxylatgruppen enthaltende aromatische Diamine (DE-A 2 720 166) sowie die in der DE-A 2 635 400, aufgeführten hochschmelzenden Diamine genannt. Beispiele für aliphatisch-aromatische Diamine sind die Aminoalkylthioaniline gemäß DE-A 2 734 574.

Zur Herstellung der im erfindungsgemäßen Verfahren einsetzbaren NCO-Verbindungen ebenfalls, wenn auch weniger bevorzugt, verwendbare Verbindungen sind organofunktionelle Polysiloxane, die zwei endständige, gegenüber Isocyanatgruppen reaktionsfähige Gruppen und Struktureinheiten der Formel —O—Si $(R)_2$— aufweisen, wobei in dieser Formel R für einen $C_1$-$C_4$-Alkyl- oder einen Phenylrest, vorzugsweise jedoch für einen Methylrest, steht. Erfindungsgemäß eignen sich als Ausgangsmaterialien sowohl die an sich bekannten, endständige organofunktionelle Gruppen aufweisenden reinen Polysiloxane als auch die an sich bekannten endständig organofunktionellen Siloxanpolyoxyalkylencopolymeren.

Die erfindungsgemäß besonders bevorzugten Organopolysiloxane entsprechen der allgemeinen Formel

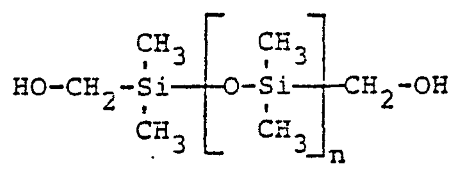

n = 5 bis 29

Sie werden in an sich bekannter Weise durch Äquilibrierung von 1,1,3,3-Tetramethyl-1,3-hydroxymethyldisiloxan der Formel

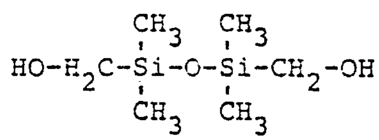

mit Octamethylcyclotetrasiloxan in Gegenwart von Schwefelsäure bzw. nach dem Verfahren der DE-B 1 236 505 hergestellt.

Die freie, aromatisch gebundene Isocyanatgruppen aufweisenden NCO-Prepolymeren werden in an sich bekannter Weise durch Umsetzung der Reaktionspartner in der Schmelze oder in Lösung hergestellt. Das Äquivalentverhältnis von NCO-Gruppen zu aktive Wasserstoffatome aufweisenden Gruppen (bevorzugt OH-Gruppen) ist in jedem Fall größer als 1, soll in der Regel zwischen 1,5 : 1 und 2,8 : 1 liegen. Selbstverständlich ist es möglich, einen noch größeren überschuß an Polyisocyanat zu verwenden. Die NCO-Prepolymeren (« NCO-Voraddukte ») haben je nach den gewählten Ausgangskomponenten im allgemeinen ölige bis wachsartige Konsistenz. Beträgt das NCO/OH-Verhältnis mehr als 2, so erhält man im wesentlichen nicht verlängerte NCO-Voraddukte, während NCO/OH-Verhältnisse von unter 2 eine Erhöhung des mittleren Molekulargewichts der NCO-Voraddukte zur Folge haben. Es ist, wie schon erläutert, auch möglich, niedermolekulare Polyole als Kettenverlängerungsmittel bei der Herstellung der NCO-Prepolymere anteilmäßig neben höhermolekularen Ausgangsverbindungen mitzuverwenden ; in diesem Fall erhält man ebenfalls höhermolekulare NCO-Voraddukte.

Werden die so erhaltenen NCO-Prepolymere noch einer Destillation — vorteilhaft unter Verwendung eines Dünnschichtverdampfers — unterworfen, wobei die monomeren Polyisocyanate entfernt werden, so werden im erfindungsgemäßen Verfahren Produkte mit einem sehr geringen bzw. praktisch ohne Gehalt an monomerem Diamin erhalten.

Für das erfindungsgemäße Verfahren werden NCO-Prepolymere bevorzugt, die aus höhermolekularen Polyolen (Molmasse 400-12 000), vorzugsweise Polyetherpolyolen, gegebenenfalls unter Mitverwendung von Kettenverlängerungsmitteln der oben beschriebenen Art (Molmasse 62-399), durch Umsetzung mit aromatischen Diisocyanaten im Äquivalentverhältnis von 1 : 1,5 bis 1 : 2,8, insbesondere ca. 1 : 1,5 bis 1 : 2, erhalten worden sind.

Der NCO-Gehalt der eingesetzten NCO-Prepolymere beträgt 0,5 % bis 30 Gew.-%, bevorzugt 1,2 Gew.-% bis 25 Gew.-%, besonders bevorzugt 1,5 Gew.-% bis 10 Gew.-%.

Im erfindungsgemäßen Verfahren können jedoch auch sogenannte « Semiprepolymere », d. h. Mischungen von NCO-Prepolymeren mit weiteren freien Polyisocyanaten, eingesetzt werden, die einen u. U. noch höheren Gehalt, z. B. bis 40 Gew.-% NCO, aufweisen können. Aus praktisch/wirtschaftlichen Gründen ist dies jedoch in den meisten Fällen nicht sinnvoll, außerdem können die aus den monomeren Polyisocyanatanteilen entstandenen monomeren Aminanteile bei einer Reihe von Anwendungen stören.

Die freie NCO-Gruppen aufweisenden Verbindungen a) in Form ihrer (zumeist urethangruppenfreien) modifizierten Isocyanate bzw. in Form ihrer (urethangruppenhaltigen) NCO-Prepolymeren bzw. ihrer « Semiprepolymeren » besitzen insgesamt einen Gehalt an NCO-Gruppen innerhalb von 0,5 bis 40 Gew.-%, bevorzugt 1,2 bis 25 Gew.-% und besonders bevorzugt von 1,5 bis 10 Gew.-% NCO.

Die Wassermenge b) beträgt mindestens 1 Mol (2 Äquivalent) Wasser pro Äquivalent NCO-Gruppe bei der Hydrolyse der NCO-Verbindung a). Bevorzugt wird die ≥ 5-fache (besonders bevorzugt ≥ 10-fache) stöchiometrische Wassermenge, verwendet. Zumeist liegt der Anteil Wasser oberhalb von 1 Teil pro 100 Teile NCO-Verbindung a).

Als Katalysatoren c) kommen Alkali-carbonate oder -hydrogencarbonate, z. B. Natrium- oder Kaliumcarbonat bzw. Natrium- oder Kaliumhydrogencarbonat, sowie Alkali- und Erdalkalisalze von Carbonsäuren, gegebenenfalls in Form ihrer Komplexe mit acyclischen, mono-, di- oder polycyclischen Kronenethern und Kryptanden, sowie von Phasentransfer-Katalysatoren vom Oniumtyp in Betracht. Beispielsweise seien als Kronenether-Verbindungen genannt :

(1,13-Bis-8-chinolyl)-1,4,7,10,13-pentaoxatridecan,
4,7,13,18-Tetraoxa-1,10-diazabicyclo-(8,5,5)-eicosan,
4,7,13,16,21-Pentaoxa-1,10-diazabicyclo-(8,8,5)-tricosan,
4,7,13,16,21,24-Hexaoxa-1,10-diazabicyclo-(8,8,8)-hexacosan,
5,6-Benzo-4,7,13,16,21,24-hexaoxa-1,10-diazabicyclo-(8,8,8)-hexacosan,
1,4,7,10,13,16-Hexaoxacyclooctadecan,
2,5,8,11,14,17-Hexaoxaoctadecan.

Diese Verbindungen sind bekannt und beispielsweise in der Firmenschrift von Merck, Kontakte 1/77, S. 29 ff aufgeführt.

Hinreichend lösliche Katalysatoren sind jedoch bevorzugt, wobei es zumeist nicht stört, wenn z. B. Alkali-carbonate bzw. -hydrogencarbonate in der zur Verfügung stehenden Wassermenge nur teilweise gelöst sind, da hinreichende Mengen an Katalysatoren in gelöster Form vorliegen. Die ungelösten Teile fördern eine glatte Filtrierbarkeit der Produkte.

Als Alkali- und Erdalkalisalze von Carbonsäuren werden vorzugsweise die Alkalisalze von Mono- und Polycarbonsäuren eingesetzt. Die Säurestärke der Carbonsäuren sollte dabei nicht über einem $k_S$-Wert von $10^{-3,5}$ liegen.

Besonders bevorzugt sind die Alkalisalze von aliphatischen oder cycloaliphatischen Monocarbonsäuren mit bis zu 10 C-Atomen, z. B. Natrium- oder Kalium-acetat, -propionat, -butyrat, -valeriat, -hexanoat, -octanoat, -decanoat oder das Alkalisalz der Cyclohexancarbonsäure. Die höheren carbonsauren Salze sind gleichfalls katalytisch wirksam, ergeben jedoch bisweilen Schwierigkeiten wegen ihrer seifenartigen Wirkung. Weitere Beispiele sind Ca-Acetat oder Mg-Acetat.

Die Katalysatoren können auch in beliebiger Mischung eingesetzt werden.

Die einzusetzenden Mengen an Katalysatoren betragen im allgemeinen ca. 1-200 g, bevorzugt 2-50 g, besonders bevorzugt 5-30 g Katalysator pro Äquivalent NCO-Gruppe in a).

Als wasserlösliche/wassermischbare Lösungsmittel d) werden solche auf Etherbasis, vorzugsweise Dioxan und Tetrahydrofuran, jedoch auch die Ether des Ethylenglykols oder Propylenglykols, ferner wassermischbare Lösungsmittel mit z. B. Carbonsäuredialkylamidgruppen und anderen Gruppen eingesetzt.

Geeignete Lösungsmittelklassen sind :

1. wasserlösliche, aliphatische oder cycloaliphatische Säureamide mit 1 bis 10 Kohlenstoffatomen, z. B. Dimethylformamid, Diethylformamid, N-Methylpyrrolidon, Dimethylacetamid, Caprolactam, Formamid. Bevorzugt sind Dimethylformamid, Dimethylacetamid und N-Methylpyrrolidon,
2. wasserlösliche Ether des Etherglykols oder Propylenglykols, sowie die cyclischen Ether Tetrahydrofuran und 1,4-Dioxan, ferner
3. wasserlösliche, tetraalkylierte aliphatische Harnstoffe mit 4 bis 12 C-Atomen, z. B. Tetramethylharnstoffe oder Tetraethylharnstoff,
4. wasserlösliche, aliphatische oder cycloaliphatische Sulfone oder Sulfoxide mit 2 bis 10 Kohlenstoffatomen, z. B. Tetramethylensulfon oder Dimethylsulfoxid,
5. wasserlösliche, aliphatische oder cycloaliphatische Phosphorsäureamide, z. B. Hexamethylphosphorsäuretriamid,
6. Acetonitril,
7. wasserlösliche Ketone : wie Aceton.

Die Lösungsmittel können auch in beliebigen Mischungsverhältnissen zueinander eingesetzt werden. Unter den genannten Lösungsmitteln werden solche bevorzugt, welche bei Normaldruck zwischen 56 und 250 °C, vorzugsweise 64 bis 165 °C, sieden, da sich hierbei die Aufarbeitung vereinfacht.

Bevorzugte wassermischbare Lösungsmittel sind Dimethylformamid, Dimethylacetamid und N-Methyl-pyrrolidon, Tetramethylensulfon, Acetonitril, Aceton, sowie 1,4-Dioxan und Tetrahydrofuran. Technisch ganz besonders geeignet und zugänglich sind Dimethylformamid, Acetonitril und Dioxan, weniger bevorzugt sind die Zerewitinoff-aktiven Substanzen, wie z. B. Caprolactam oder Formamid oder auch tert.-Butanol, oder gegenüber Aminogruppen nicht völlig unreaktive Substanzen wie z. B. Aceton, obwohl auch durchaus noch akzeptable Produkte erhalten werden.

Eine Mitverwendung von nicht vollständig mit Wasser mischbaren Lösungsmitteln, z. B. Propionitril, Methylethylketon, Ethylacetat oder kohlenwasserstoffen ist in untergeordneten Mengen möglich, aber nicht bevorzugt.

Für die Mengen (insbesondere die Obergrenzen) an einzusetzenden Lösungsmitteln e) gelten folgende Randbedingungen des Verfahrens :

1. Pro 100 Teile NCO-Verbindung a) sollen in der Hydrolyse-Reaktionsmischung $\geqslant 10$, bevorzugt $\geqslant 20$ und besonders bevorzugt $\geqslant 40$ Teile d) verwendet werden.
2. Es muß soviel Wasser b) und gegebenenfalls Lösungsmittel d) verwendet werden, daß eine im wesentlichen homogene (höchstens schwach trübe) oder vorzugsweise eine homogene, klare Lösung mit der NCO-Verbindung bei den Reaktionstemperaturen gebildet wird.

Die katalytisch wirkenden Verbindungen werden im allgemeinen den Lösungsmitteln und Wasser zugesetzt. Die Zugabe zur Isocyanatgruppen-haltigen Verbindung ist u. U. möglich, aber nicht bevorzugt.

Zur Hydrolyse der NCO-Verbindung zu Polyaminen mit hinreichend hoher Aminzahl (hoher Konversionsrate) ist es günstig, eine Konzentration der NCO-Verbindung $\leqslant 66$ Gew.-% in der Reaktionsmischung aufrechtzuerhalten. Je größer die Verdünnung bei der Reaktion gewählt wird, um so besser wird im allgemeinen der Hydrolyseumsatz, d. h. es werden um so höhere Aminzahlen des Polyamins, d. h. eine um so höhere Konversion der NCO- in die $NH_2$-Gruppen, erhalten. Eine Grenze der Verdünnung ergibt sich praktisch aus der Wirtschaftlichkeit bei der Aufarbeitung ; sie liegt in der Praxis etwa bei 3 %iger Lösung.

Es ist dabei aber mindestens so viel Lösungsmittel mitzuverwenden, daß eine weitgehend homogene, vorzugsweise homogene, Reaktionsmischung verbleibt.

In einer weniger bevorzugten Ausführungsform können der Reaktionsmischung auch « H-aktive Gruppen » enthaltende Verbindungen mit zwei oder mehreren Hydroxy-, Amino- und/oder Thiolgruppen beigemischt werden. Diese Verbindungen wurden bereits als Aufbaukomponenten der im erfindungsgemäßen Verfahren einsetzbaren NCO-Verbindungen genannt, besonders bevorzugt sind difunktionelle bis gegebenenfalls tetrafunktionelle Verbindungen des Molekulargewichts 62-2 000, insbesondere solche mit mindestens 2 primären Hydroxygruppen, z. B. Ethandiol, Butandiol, Propandiol, Polyethylenglykole, Trimethylolpropan oder ähnliche. Selbstverständlich können auch Verbindungen mit verschiedenen « H-aktiven Gruppen » verwendet werden, z. B. Aminoethanole.

Verbindungen, die nur eine H-aktive Gruppe aufweisen, z. B. Methanol, Ethanol, Cyclohexanol, Cyclohexylamin, Anilin, asymmetrisches Dimethylhydrazin, Dimethylaminopropylamin, können als monofunktionelle Kettenabbrecher mitverwendet werden.

Als Nebenreaktion im erfindungsgemäßen Verfahren kann die Vorverlängerung auftreten, d. h. Isocyanat und bereits gebildetes Amin reagieren unter Kettenverknüpfung zu Harnstoffen. Diese Nebenreaktion läßt sich durch Arbeiten in verdünnter Lösung, der Verwendung der erfindungsgemäßen Katalysatoren und der Einhaltung relativ hoher Reaktionstemperaturen, z. B. 80 bis 130 °C, weitgehend zurückdrängen. Zwar ist ein möglichst geringes Ausmaß dieser Nebenreaktionen erwünscht, aus ökonomischen Gründen kann aber auch ein gewisser Grad an Vorverlängerung in Kauf genommen werden.

Die erfindungsgemäße Reaktion wird bevorzugt in homogener Phase durchgeführt. Durch ein geringfügiges Überdosieren der Wassermenge oder der Menge der NCO-Verbindung kann gegebenenfalls eine leichte Trübung der Reaktionsmischung erhalten werden, da die Ausgangsstoffe nicht mehr vollständig gelöst sind. Eine Durchführung im stark heterogenen Bereich, z. B. durch übermäßige Wasserzugabe unter Ausfällung des NCO-Prepolymers ergibt jedoch unzureichende Produkte. Durch einige wenige Vorversuche lassen sich die von den Ausgangsverbindungen abhängigen optimalen Mischungsverhältnisse leicht bestimmen.

Die Reaktion kann bei Temperaturen von 50 bis 165 °C durchgeführt werden. Bevorzugt wird jedoch bei Temperaturen von 80 bis 130 °C gearbeitet, da hierbei die besten Raum/Zeit-Ausbeuten bei gleichzeitig hoher Löslichkeit und überraschenderweise geringster Harnstoff-Verlängerung erreicht werden. Besonders bevorzugt wird am Siedepunkt des Gemisches gearbeitet, der wegen der Anwesenheit von Wasser zumeist bei ca. 90 bis 105 °C liegt. Unter besonderen Umständen kann es auch notwendig werden, die Reaktion unter Druck durchzuführen, um ausreichend hohe Temperaturen zu erhalten.

Das Einsetzen der Reaktion ist durch die fast spontane Abspaltung von $CO_2$ zu erkennen, die auch bereits bei niedrigen Temperaturen, z. B. 20 °C, beobachtbar ist. Es ist jedoch erheblich günstiger, erfindungsgemäß bei den angegebenen höheren Temperaturen zu arbeiten, um die Harnstoffbildung zurückzudrängen. Wichtig ist, daß für eine sehr gute und schnelle Durchmischung unter homogener Lösung der Reaktanden gesorgt wird, was im wesentlichen durch die Verwendung der Lösungsmittel sichergestellt werden muß. In gleicher Richtung wirkt auch die Viskositätsverminderung bei Anwendung der höheren Reaktionstemperaturbereiche. Die Reaktion kann diskontinuierlich oder kontinuierlich durchgeführt werden.

In einer diskontinuierlichen Ausführungsform wird z. B. die NCO-Gruppen aufweisende Verbindung a) in die wäßrige, Lösungsmittel und Katalysatoren enthaltende Mischung, eingebracht. Dies kann mittels

eines Tropftrichters oder z. B. durch maschinelle Einspritzung mittels einer Düse geschehen, wobei durch intensives Rühren eine möglichst gute Verteilung angestrebt wird.

In einer kontinuierlichen Ausführungsform, die für eine großtechnische Produktion besonders geeignet ist, werden die NCO-Verbindungen a) (gegebenenfalls als Lösung) und die wäßrige Lösung getrennt einem gemeinsamen Reaktionsraum zudosiert, z. B. mittels eines Durchflußmischers intensiv vermischt, so zur Reaktion gebracht und aus dem Mischraum schnell ausgetragen, Die Dosierung kann z. B. über graduierte Tropftrichter oder mittels einer Kolben- und/oder Membrandosierpumpe oder einer anderen maschinellen Dosiervorrichtung vorgenommen werden. Es ist bei der Kontinuierlichen Dosierung bevorzugt, beide Komponenten in sehr kurzer Zeit (Sekunden oder Bruchteilen davon) mit einer geeigneten, gegebenenfalls maschinell betriebenen Vorrichtung, zu vermischen, zur Reaktion zu bringen und aus dem Reaktionsraum auszutragen.

Zur Erleichterung der Reaktion der Isocyanatgruppen von a) mit der wäßrigen, katalysatorhaltigen Lösungsmittelphase können verschiedene Zusätze verwendet werden. So können zum Homogenisieren ein oder mehrere handelsübliche Emulgatoren zugesetzt werden, z. B. in Mengen von 0,01 bis 1 Gew.-Teil auf 100 Teile Reaktionsmischung. Bei Verwendung homogener Reaktionsmischungen (gelöste Komponenten) ist dies jedoch nicht notwendig.

Bei den in der kontinuierlichen Ausführungsform geeigneten Durchflußmischern unterscheidet man zwischen den statischen Mischern mit festen Einbauten und dynamischen Mischern mit beweglichen Einbauten nach dem Rotor-Stator-Prinzip. Sie können gegebenenfalls geheizt oder gekühlt werden. Die erforderliche Mischenergie wird bei den statischen Mischern über die Pumpen aufgebracht, während bei den dynamischen Mischern ein separater Motor den Rotor treibt. In allen Fällen hängt der Reaktionsumsatz der Isocyanatgruppen zu Aminogruppen auch von der aufgebrachten Leistung, bzw. den entsprechend erzeugten Scherkräften, d. h. von der möglichst schnellen homogenen Verteilung der NCO-Verbindung im Reaktionsmedium ab.

Als statische Mischer lassen sich beispielsweise Mischer mit einfachen Einbauten (z. B. Wendeln) oder komplizierten Einbauten (z. B. Packungsmischern) oder Mehrkanalmischer verwenden. Weiterhin können auch Mischdüsen oder die Mischkammern in den HK-Maschinen der Fa. Hennecke (Birlinghoven, Bundesrepublik Deutschland) in die die Ausgangsprodukte unter hohem Druck eingedüst werden (Gegenstrominjektion), eingesetzt werden. Als dynamische Mischer kommen für das erfindungsgemäße Verfahren beispielsweise die Durchflußmischer in Betracht, die ebenso wie die bekannten Kreiselhomogenisierungsmaschinen nach dem Stator-Rotor-Prinzip arbeiten, dabei jedoch nicht als Förderorgane benutzt werden können. Die aufzubringende Mischungsleistung beträgt je nach gewünschtem Dispergiergrad, verwendetem Mischertyp und Viskosität der Ausgangsstoffe etwa 1 bis über 10 KW pro Liter Mischinhalt.

Nach dem Mischungsvorgang kann direkt zum Polyamin aufgearbeitet werden, gegebenenfalls kann auch eine kurze Nachreaktionszeit von meistens weniger als 5 Minuten angeschlossen werden. Hierbei wird das Reaktionsgemisch bevorzugt unter Normaldruck am leichten Rückfluß erhitzt, um das entstandene Kohlendioxid möglichst vollständig abzutrennen. Die Reaktionsmischung kann ohne Nachteile aber auch längere Zeit auf Temperatur gehalten werden. Bevorzugt wird nach erfolgter Vermischung jedoch sofort aufgearbeitet.

Auch die Aufarbeitung kann kontinuierlich oder diskontinuierlich erfolgen. Die Aufarbeitung des Reaktionsgemisches geschieht gewöhnlich destillativ, extraktiv oder über eine Phasentrennung oder mit einer Kombination dieser Methoden.

Es werden, gegebenenfalls unter reduziertem Druck, die flüchtigen Bestandteile abdestilliert. Im allgemeinen werden Sumpftemperaturen (im verbleibenden Polyamin) von 100 bis etwa 130 °C gegen Ende der Eindampfung eingehalten.

Bei Verwendung eines Dünnschichtverdampfers können kurzfristig deutlich höhere Temperaturen, z. B. 170 bis 200 °C, im Polyamin erreicht werden.

Extraktionsverfahren, gegebenenfalls nach Verdünnung mit Wasser, können mit wasserunlöslichen Lösungsmitteln wie Methylenchlorid oder Chlorbenzol durchgeführt werden, sind jedoch nicht bevorzugt.

Eine Phasentrennung des Reaktionsgemisches durch Abkühlung tritt in manchen Fällen ein, wenn die Hydrolyse bei relativ hohen Temperaturen und in Gegenwart von relativ viel Wasser an der Grenze der Löslichkeit vorgenommen wurde. Die Phasentrennung kann durch Zusatz von Wasser verbessert oder auch erst erreicht werden. Man trennt die wäßrige, gegebenenfalls Lösungsmittel und zumeist auch den Katalysator enthaltende Phase von der Polyaminphase ab.

Die wäßrige Phase kann dann meistens direkt wiederverwendet werden.

Die Polyaminphase enthält neben dem Polyamin gegebenenfalls Restmengen des Katalysators, etwas Wasser, sowie evtl. Lösungsmittel d), welche destillativ, gegebenenfalls unter Anlegen eines Vakuum oder über eine Dünnschichtdestillation, möglichst vollständig entfernt werden. Sind noch Salze enthalten, können diese durch Filtration, z. B. über eine Drucknutsche, entfernt ·verden.

Enthält die NCO-Gruppen-haltige Verbindung — bedingt durch ihre Herstellung — noch freies, d. h. monomeres Isocyanat, so kann u. U. das hieraus entstehende monomere Amin bei der Aufarbeitung durch Phasentrennung sich in der Wasser/Lösungsmittelphase stark anreichern. Das durch diese einfache Aufarbeitung erhaltene Polyamin ist dann praktisch monomerenfrei. Es kann sich dann aber

empfehlen, die wäßrige Lösung durch Aufarbeitung von monomerem Amin weitgehend zu befreien, bevor sie wiederverwendet wird.

Die nach der Aufarbeitung erfindungsgemäß erhaltenen Polyamine stellen im allgemeinen farblose bis schwach gefärbte, mittelviskose bis hochviskose und gegebenenfalls höherschmelzende Produkte mit den bereits angegebenen Aminogruppengehalten dar. Diese Polyamine weisen entsprechend ihren Ausgangsstoffen ferner Urethan- und/oder Harnstoff- und/oder Uretdion- und/oder Isocyanurat- und/oder Biuretgruppen, sowie gegebenenfalls Ether- und/oder Acetal- und/oder Carbonat- und/oder Ester- und/oder Thioether und/oder Dialkylsiloxangruppen und/oder die Reste von Polybutadienen auf, wie sie bereits in den NCO-Verbindungen vorgelegen haben. Durch Nebenreaktionen können jedoch auch zusätzliche Bindungen entstehen, z. B. Harnstoffgruppen aus bereits verseiften Anteilen und noch verbliebenen NCO-Gruppen während der Hydrolysereaktion. Die Menge der in den Polyaminen enthaltenen primären aromatischen Aminogruppen entsprechen maximal der Menge der NCO-Gruppen in den NCO-Verbindungen, also etwa 0,19 bis 20,3 Gew.-% $NH_2$, bevorzugt 0,46 bis 11,3 Gew.-% $NH_2$ und besonders bevorzugt 0,58 bis 6,7 Gew.-% $NH_2$.

An aliphatische Reste gebundene NCO-Gruppen liefern hochreaktive aliphatische Amine als Hydrolysenprodukte, welche mit noch vorhandenen NCO-Gruppen sehr schnell zu Harnstoffverbindungen abreagieren können und somit zumeist relativ höhermplekulare Polyharnstoffamine mit einem in vielen Fällen niedrigen $NH_2$-Gehalt ergeben.

Die erfindungsgemäß erhaltenen, bevorzugt aromatischen Polyamine werden wegen ihres niedrigen Dampfdruckes vorzugsweise als Reaktionspartner für gegebenenfalls blockierte Polyisocyanate bei der Herstellung von Polyurethanen (Polyurethanharnstoffen), gegebenenfalls zelligen Polyurethankunststoffen oder Polyurethanschaumstoffen eingesetzt, wobei sie gegebenenfalls auch mit anderen niedermolekularen (Molekulargewicht 32 bis 399) und/oder höhermolekularen (Molekulargewicht 400 bis ca. 12 000) Verbindungen mit gegenüber Isocyanaten reaktiven Gruppen kombiniert werden können. Geeignete Ausgangskomponenten für die Herstellung von Polyurethankunststoffen werden oben im Zusammenhang mit der Prepolymerherstellung bzw. auch in DE-A 2 302 564, DE-A 2 432 764 (US-PS 3 903 679) sowie in den DE-A 2 639 083, 2 512 385, 2 513 815, 2 550 796, 2 550 797, 2 550 833, 2 550 860 und 2 550 862 genannt. Dort finden sich auch Hinweise auf bei der Polyurethanherstellung gegebenenfalls mitzuverwendenden Hilfs- und Zusatzstoffe.

Die Herstellung von Polyurethan (harnstoff)en mittels der erfindungsgemäß hergestellten Polyamine ist ebenfalls Gegenstand der vorliegenden Erfindung. Ihre Anwendung kann z. B. für Elastomere, Beschichtungen, Fäden in der Applikation aus Schmelzen, Lösungen, Dispersionen oder als Reaktivkomponentenmischung erfolgen.

Weitere Verwendungszwecke der erfindungsgemäß hergestellten Polyamine sind z. B. Kupplungskomponenten für Diazofarbstoffe, Härter für Epoxid- und Phenolharze, sowie alle anderen an sich bekannten Reaktionen von Aminen wie Amid- oder Imidbildung und andere.

Die folgenden Beispiele dienen der Erläuterung des erfindungsgemäßen Verfahrens. Wenn nicht anders vermerkt, sind Mengenangaben als Gewichtsteile bzw. Gewichtsprozente zu verstehen.

## Beispiele

### Beispiel 1 (Vergleichsbeispiel — nicht erfindungsgemäß)

In einer 90 °C heißen Mischung aus 1 500 ml Dimethylformamid und 250 ml Wasser werden 500 g eines einen NCO-Wert von 3,8 % aufweisenden NCO-Prepolymers (0,45 mol NCO) innerhalb 35 Minuten zugegeben. Das NCO-Prepolymer wurde aus einem Polypropylenglykolether der OH-Zahl 56 und 2,4-Diisocyanatotoluol im Molverhältnis 1 : 2 durch Vereinigung beider Komponenten und 4-stündiges Erhitzen auf 80 °C hergestellt. Während der Zugabedauer entweichen 4,1 l $CO_2$, die Reaktionslösung ist unmittelbar nach Beendigung der Zugabe des NCO-Prepolymers NCO-frei. Die bei der Reaktionstemperatur einphasige Reaktionsmischung ergibt beim Abkühlen auf 20 °C Phasen, von denen die obere, 1 400 ml umfassende wäßrige DMF-Phase verworfen wird. Die untere Phase wird von Resten flüchtiger Stoffe bei 20 mbar/100 °C und dann 15 mbar/100 °C, jeweils für 3 Stunden, befreit. Daten in Tabelle 1.

### Vergleichsversuch 1a (nicht erfindungsgemäß)

Zu einer vorgelegten Mischung aus 500 ml Wasser, 88,5 g Kaliumcarbonat (wasserfrei) und 0,5 g Mersolat ®H (dient als Emulgator), die extern auf 18 bis 20 °C gekühlt wird, werden 500 g des NCO-Prepolymers aus Beispiel 1 (60 °C warm) in 45 Minuten zugegeben. Während der Zutropfdauer ist keinerlei Reaktion zu erkennen. Beim Nachrühren bei dieser Temperatur tritt langsam Viskositätserhöhung des Reaktionsgemisches auf, die durch Temperaturerhöhung beschleunigt werden kann. Es resultiert jeweils ein in Dimethylformamid unlösliches Produkt ohne merklichen Anteil an Aminogruppen.

Vergleichsbeispiel 1a folgt dem Reaktionsablauf des Verfahrens des Standes der Technik. Im Gegensatz zum erfindungsgemäßen Verfahren bei erhöhter Temperatur führt die Reaktion mit einer extern gekühlten Lösung zu unbrauchbaren Produkten.

Vergleichsbeispiel 1b (nicht erfindungsgemäß)

700 ml Wasser werden auf 90 °C erhitzt. Innerhalb 15 Minuten werden 200 g des NCO-Prepolymers aus Beispiel 1 zugegeben. 30 Minuten wird bei dieser Temperatur weitergerührt. Nachdem bei vermindertem Druck das Wasser abdestilliert wurde, resultiert ein in heißem Dimethylformamid und in verdünnter Schwefelsäure unlösliches Produkt.

Das Ergebnis zeigt, daß auch bei hohen Temperaturen (90 °C) ohne die erfindungsgemäßen Katalysatoren keine brauchbaren Produkte erhalten werden.

Vergleichsbeispiel 1c (nicht erfindungsgemäß)

Eine Mischung aus 500 g Wasser und 21,7 g Natriumhydroxid wird vorgelegt und auf 90 °C erhitzt. Innerhalb 15 Minuten werden 500 g des NCO-Prepolymers zugegeben und 30 Minuten nachgerührt. Das in diesem Stadium anfallende Produkt ist bereits verquallt und vernetzt und in heißem Dimethylformamid unlöslich.

Auch dieses Beispiel zeigt, daß in Gegenwart der bekannten Katalysatoren (Alkalihydroxide) bei hohen Temperaturen (90 °C) nur unbrauchbare Produkte erhalten werden.

Beispiele 2-5 (erfindungsgemäß)

Beispiel 2

Zu einer 90 °C heißen Mischung aus 1 500 ml Dimethylformamid, 250 ml Wasser und 5 g Kaliumacetat, die als klare Lösung vorgelegt wird, werden innerhalb 30 Minuten 500 g des auf 20 °C warmen NCO-Prepolymers aus Beispiel 1 zugegeben. Hierbei entweichen 7,5 l Kohlendioxid, die Reaktionslösung ist unmittelbar nach Beendigung der Zugabe des NCO-Prepolymeren NCO-frei. Die nach dem Abkühlen sich bildende wäßrige DMF-Phase wird von der organischen, unteren Phase abgetrennt und verworfen. Die organische Phase wird bei 20 mbar/100 °C und dann 0,5 mbar/100 °C vom Restlösungsmittel befreit. Das aminische Endprodukt wird durch Filtration von Spuren Kaliumacetat befreit. Daten in Tabelle 1.

Beispiel 3

Zu einer 90 °C heißen Mischung aus 1 500 ml Dimethylformamid, 250 ml Wasser und 15 g Kaliumacetat, die als Klare einphasige Lösung vorgelegt wird, werden innerhalb 30 Minuten 500 g des 20 °C warmen NCO-Prepolymers aus Beispiel 1 zugegeben. Dabei werden 7,9 l Kohlendioxid frei, die Reaktionsmischung ist unmittelbar nach Beendigung der Zugabe des NCO-Prepolymeren bereits NCO-frei. Die noch heiße Reaktionsmischung ist bereits zweiphasig, sie wird in Gänze von ausgefallenem Kaliumacetat (ca. 1,8 g) abfiltriert. Die obere Phase ($H_2O$, DMF) wird destillativ vom Salz befreit, es hinterbleiben 12,7 g Kaliumacetat. Die untere, aminische Phase wird bei 20 mbar/100 °C und dann 0,5 mbar/100 °C vom Restlösungsmittel befreit und anschließend das 40 °C warme aminische Endprodukt durch Filtration von Spuren Salz getrennt. Daten in Tabelle 1.

Beispiel 4

Zu einer 90 °C heißen Mischung aus 1 500 ml Dimethylformamid, 250 ml Wasser und 20 g Kaliumacetat, die nicht vollständig gelöst sind, werden innerhalb 30 Minuten 500 g eines 20 °C warmen, einen NCO-Wert von 4,0 % besitzenden NCO-Prepolymers zugegeben. Dieses NCO-Prepolymer wurde aus den gleichen Komponenten ebenso wie das Prepolymer aus Beispiel 1 hergestellt. 7 l Kohlendioxid werden freigesetzt. Vom ungelösten Salz wird die Lösung abfiltriert und die gebildete wäßrige DMF-Phase (1 440 ml) verworfen. Die aminische Phase wird wie in Beispiel 3 behandelt. Werte in Tabelle 1.

Beispiel 5

Beispiel 5 wird wie Beispiel 4 durchgeführt, jedoch werden 28 g Kaliumacetat verwendet. Aufarbeitung wie in Beispiel 4. Werte in Tabelle 1.

(Siehe Tabelle 1 Seite 13 f.)

Tabelle 1

Daten der in Beispielen 1-5 erhaltenen Polyamine

| | Beispiele 1 (Vergl.) | 2 | 3 | 4 | 5 |
|---|---|---|---|---|---|
| Ausbeute (%) | 96 | 94 | 96 | 96 | 91 |
| prim. Stickstoff (%)[1)] | 0,49 | 0,76 | 0,87 | 0,96 | 0,95 |
| Ges.-Stickstoff (%)[2)] | 2,43 | 2,46 | 2,48 | 2,45 | 2,51 |
| NH-Zahl (mg KOH/g)[3)] | 19,6 | 30,4 | 34,8 | 38,4 | 38,0 |
| NH-Zahl (mg KOH/g)[4)] | 19,1 | 31,1 | 35,1 | 38,4 | 38,1 |
| Wasser-Gehalt (%)[5)] | 0,08 | 0,1 | 0,08 | 0,07 | 0,06 |
| Viskosität (mPa.s/75 °C) | 4800 | 710 | 490 | 450 | 473 |

[1]) Titration mit Perchlorsäure
[2]) nach Dumas
[3]) nach [1]) errechnet
[4]) bestimmt mit der Acetanhydrid-Methode
[5]) nach Karl Fischer

Beispiele 6-10

Verwendung von Kaliumhydrogencarbonat als Base in verschiedenen Mengen.

Beispiel 6

Zur einer 90 °C heißen Mischung aus 1 500 ml Dimethylformamid, 250 ml Wasser und 5 g Kaliumhydrogencarbonat, die als klare, einphasige Lösung vorgelegt wird, werden innerhalb 30 Minuten 500 g des auf 60 °C erwärmten NCO-Prepolymers aus Beispiel 1 zugegeben. Dabei werden 6,7 l Kohlendioxid frei. Nach Zugabe des NCO-Prepolymers wird das Dimethylformamid/Wasser-Gemisch sofort abdestilliert, zuerst bei 100 °C/20 mbar und dann 100 °C/1 mbar. Zum Schluß wird das aminische Endprodukt vom Kaliumhydrogencarbonat-Salz abgesaugt. Daten in Tabelle 2.

Beispiel 7

Beispiel 7 wird wie Beispiel 6 durchgeführt. Jedoch werden in Beispiel 7 10 g Kaliumhydrogencarbonat verwendet und es werden 6,9 l $CO_2$ frei. Daten in Tabelle 2.

Beispiel 8

Beispiel 8 wird wie Beispiel 6 durchgeführt. Jedoch werden in Beispiel 8 20 g Kaliumhydrogencarbonat verwendet und es werden 7,3 l $CO_2$ frei. Daten in Tabelle 2.

Beispiel 9

Beispiel 9 wird wie Beispiel 6 durchgeführt, jedoch werden in Beispiel 9 28,6 g Kaliumhydrogencarbonat verwendet und 7,3 l $CO_2$ frei.

Beispiel 10

Vorgelegt wird eine Mischung aus 750 ml Dimethylformamid, 250 ml Wasser und 28,6 g Kaliumhydrogencarbonat und auf 90 °C erhitzt. Innerhalb 30 Minuten werden 500 g des auf 60 °C erwärmten NCO-Prepolymers aus Beispiel 1 zugegeben, wobei 7,8 l Kohlendioxid frei werden. Nach Zugabe des NCO-Prepolymers werden Dimethylformamid und Wasser destillativ, zuerst bei 100 °C/20 mbar, dann 100 °C/1 mbar, abgetrennt. Aus dem verbliebenen aminischen Produkt wird das Kaliumhydrogencarbonat abgesaugt. Daten in Tabelle 2.

Tabelle 2

Daten der in Beispielen 6-10 erhaltenen Polyamine

| | Beispiele | | | | |
|---|---|---|---|---|---|
| | 6 | 7 | 8 | 9 | 10 |
| Ausbeute (%) | 99 | 99 | 99 | 98 | 99 |
| prim. Stickstoff (%)[1)] | 0,88 | 0,94 | 0,99 | 1,02 | 0,99 |
| Ges.-Stickstoff (%)[2)] | 2,49 | 2,53 | 2,46 | 2,50 | 2,50 |
| NH-Zahl (mg KOH/g)[3)] | 35,2 | 37,6 | 39,6 | 40,8 | 39,6 |
| NH-Zahl (mg KOH/g)[4)] | 35,4 | 37,1 | 40,2 | 41,4 | 38,9 |
| Wasser-Gehalt (%)[5)] | 0,12 | 0,10 | 0,10 | 0,32 | 0,07 |
| Viskosität (mPa.s/75°C) | 520 | 433 | 410 | 390 | 384 |

[1)]-[5)] s. Tabelle 1.

Beispiele 11-20 (erfindungsgemäß)

In den Beispielen 11-20 werden weitere erfindungsgemäß verwendbare, anorganische Katalysatoren vorgestellt.

Beispiel 11

Zu einer am Rückfluß gehaltenen Mischung aus 1 500 ml Dimethylformamid, 200 g Wasser und 10 g Kaliumcarbonat werden 500 g des NCO-Prepolymers aus Beispiel 1 innerhalb 15 Minuten zugegeben. Während der Reaktionszeit entweichen 6,6 l $CO_2$; unmittelbar nach Beendigung der Zugabe ist die Reaktionsmischung, die im übrigen ständig intensiv gerührt wird, NCO-frei. Die bei der Reaktionstemperatur nur eine flüssige Phase aufweisende Reaktionsmischung ergibt beim Abkühlen auf Raumtemperatur zwei Phasen, von denen die obige, 1 360 ml umfassende, wäßrige DMF-Phase abgetrennt und verworfen wird. Die untere Phase wird von Resten flüchtiger Stoffe bei 20 mbar/100 °C und dann 1,5 mbar/100 °C, jeweils für 2 Stunden befreit und dann nochmals durch Absaugen mittels einer auf 100 °C erhitzten Drucknutsche bei 100 °C von geringen Spuren Salz (Pottasche) befreit. Daten in Tabelle 3.

Beispiel 12

Beispiel 12 wird wie Beispiel 11 durchgeführt, jedoch finden als Base 50 g Kaliumcarbonat Verwendung. Während der Reaktion entweichen 6,5 l $CO_2$. Aufarbeitung erfolgt wie in Beispiel 11. Daten in Tabelle 3.

Beispiel 13

Zu einer 85 °C heißen Mischung aus 1 500 ml Dimethylformamid, 300 ml Wasser und 10 g Natriumcarbonat werden 500 g des NCO-Prepolymers aus Beispiel 1 innerhalb 60 Minuten zugegeben. Während dieser Reaktionszeit entweichen 6,6 l $CO_2$, unmittelbar nach Beendigung ist die nur eine flüssige Phase aufweisende Reaktionsmischung NCO-frei. Während der Zugabe der NCO-Komponente wird intensiv gerührt. Beim Abkühlen auf 20 °C werden zwei Phasen erhalten, von denen die obere, wäßrige DMF-Phase abgetrennt und verworfen wird. Die untere Phase wird wie in Beispiel 11 aufgearbeitet. Daten in Tabelle 3.

Beispiel 14

Es wird ebenso wie in Beispiel 13 vorgegangen, mit der Ausnahme, daß die Reaktionsmischung nach beendeter Zugabe der NCO-Komponente nicht einer Phasentrennung, sondern einer Destillation bei vermindertem Druck unterworfen wird. Danach werden bei 100 °C/0,2 mbar Spuren flüchtiger Stoffe entfernt und das Salz (Soda) durch Absaugen mit einer Drucknutsche entfernt. Daten in Tabelle 3.

Beispiel 15

Es wird ebenso wie in Beispiel 13 vorgegangen mit der Ausnahme, daß anstelle von 10 g 50 g Soda Verwendung finden. Aufarbeitung erfolgt wie in Beispiel 13. Daten in Tabelle 3.

Beispiel 16

Zu einer 60 °C warmen Mischung aus 2 l Dimethylformamid, 250 ml Wasser und 10 g Natriumhydrogencarbonat werden 500 g des NCO-Prepolymers aus Beispiel 1 innerhalb 90 Minuten unter intensivem Rühren gegeben. Dabei werden 8,2 l $CO_2$ frei. Nach dem Abkühlen wird die obere Phase abgetrennt und verworfen. Aufgearbeitet wird wie in Beispiel 1. Daten in Tabelle 3.

Beispiel 17

Zu einer am Rückfluß gehaltenen Mischung aus 1 500 ml Dimethylformamid, 250 g Wasser und 5 g wasserhaltigem Natriumsulfid werden 500 g des NCO-Prepolymers aus Beispiel 1 innerhalb 30 Minuten unter intensivem Rühren zugegeben. Dabei entweichen 6,4 l $CO_2$. Unmittelbar nach Beendigung der Zugabe der NCO-Komponente ist die Reaktionsmischung NCO-frei. Die bei der Reaktionstemperatur nur eine flüssige Phase aufweisende Reaktionsmischung ergibt beim Abkühlen auf 20 °C zwei Phasen, von denen die obere, Wasser und Dimethylformamid enthaltende Phase, abgetrennt und verworfen wird. Die untere Phase wird von Resten flüchiger Stoffe bei 20 mbar/100 °C befreit und das verbliebene Salz mit einer Durcknutsche (100 °C, 3 bar) abgetrennt. Daten in Tabelle 3.

Beispiel 18

Es wird wie in Beispiel 17 vorgegangen, jedoch wird anstelle von 10 g 30 g wasserhaltiges Natriumsulfid eingesetzt 5,9 l $CO_2$ entweichen. Aufarbeitung wie in Beispiel 17. Daten in Tabelle 3.

Beispiel 19

Zu einer am Rückfluß gehaltenen Mischung aus 50 g Wasserglas (Natriumsilikat-Lösung, ≙ 128,4 mmol Na), 1,5 l Dimethylformamid und 250 g Wasser werden 500 g des auch in Beispiel 1 verwendeten NCO-Prepolymers unter intensivem Rühren zugegeben. Dabei entweichen 4,3 l $CO_2$. Unmittelbar nach Beendigung der Zugabe des NCO-Prepolymers ist die Reaktionsmischung NCO-frei. Die bei der Reaktionstemperatur nur eine flüssige Phase aufweisende Reaktionsmischung ergibt beim Abkühlen auf 20 °C zwei flüssige Phasen, von denen die obere, wäßrige DMF-Phase abgetrennt und verworfen wird. Die untere Phase wird bei 20 mbar/100 °C und dann bei 0,2 mbar/100 °C von Resten flüchtiger Stoffe befreit und dann nochmals über eine Drucknutsche filtriert. Daten in Tabelle 3.

Beispiel 20

Es wird wie in Beispiel 19 vorgegangen, jedoch ohne Phasentrennung gearbeitet und der gesamte Ansatz abdestilliert. Daten in Tabelle 3.

(Siehe Tabelle 3 Seite 16 f.)

Tabelle 3

Daten der in Beispielen 11-20 erhaltenen Polyamine

| | Beispiele 11-20 | | | | | | | | | |
|---|---|---|---|---|---|---|---|---|---|---|
| | 11 | 12 | 13 | 14 | 15 | 16 | 17 | 18 | 19 | 20 |
| Ausbeute (%) | 94 | 96 | 94 | 100 | 93 | 94 | 95 | 93 | 88 | 91 |
| prim. Stickstoff (%)[1)] | 0,93 | 0,91 | 0,96 | 1,08 | 1,05 | 1,07 | 0,88 | 0,91 | 0,94 | 0,93 |
| Ges.-Stickstoff (%)[2)] | 2,43 | 2,47 | 2,40 | 2,46 | 2,45 | 2,45 | 2,45 | 2,43 | 2,48 | 2,40 |
| NH-Zahl (mg KOH/g)[3)] | 37,0 | 36,4 | 38,4 | 43,2 | 42,0 | 42,8 | 35,2 | 36,4 | 38,4 | 36,4 |
| NH-Zahl (mg KOH/g)[4)] | 37,8 | 36,4 | 38,9 | 42,9 | 42,1 | 42,4 | 35,0 | 36,4 | 38,4 | 35,9 |
| Wasser-Gehalt (%)[5)] | 0,25 | 0,12 | 0,41 | 0,20 | 0,20 | < 0,05 | 0,41 | 0,34 | 0,12 | 0,17 |
| Viskosität (mPa.s/75°C) | 445 | 430 | 404 | 384 | 395 | 381 | 496 | 501 | 483 | 520 |

[1)]-[5)] s. Tabelle 1

Beispiele 21-26 (erfindungsgemäß)

Beispiele 21-26 variieren die Lösungsmittel.

Beispiel 21

Vorgelegt wird eine am Rückfluß gehaltene Mischung aus 1 500 ml Acetonitril, 250 ml Wasser und 28,6 g Kaliumhydrogencarbonat. Unter heftigem Rühren werden innerhalb 30 Minuten 500 g des 90 °C warmen NCO-Prepolymers aus Beispiel 1 zugegeben. Während der Zugabe entwichen in konstantem Strom 7 l $CO_2$, danach war die Reaktionsmischung NCO-frei. Aus der Reaktionsmischung, die auch bei 20 °C einphasig ist, wurde das Kaliumhydrogencarbonat abgesaugt. Die Lösungsmittel wurden bei 20 mbar/80 °C (Bad-T.) und dann 0,1 mbar/100 °C abdestilliert, zum Schluß wurden mit einer Glasnutsche 0,6 g Kaliumhydrogencarbonat abfiltriert. Daten in Tabelle 4.

Beispiel 22

Vorgelegt wird eine 90 °C heiße Mischung aus 1,5 l Dioxan, 250 ml Wasser und 28,6 g Kaliumhydrogencarbonat, das bei dieser Temperatur zum größten Teil gelöst vorliegt. In 45 Minuten werden 500 g des NCO-Prepolymers aus Beispiel 1 unter intensivem Rühren und Entwicklung von 7 l $CO_2$ zugegeben. Danach ist die Reaktionsmischung NCO-frei. Phasentrennung tritt nur sehr zögernd ein und muß durch Zugabe von 250 ml Wasser herbeigeführt und verstärkt werden. Vorher wird das ausgefallene Kaliumhydrogencarbonat abgesaugt. Eine untere wäßrige Phase von 700 ml wird abgetrennt und verworfen. Aus der oberen Phase werden wie in Beispiel 21 Lösungsmittel und Restsalze entfernt. Daten in Tabelle 4.

Beispiel 23

Anstelle von Dioxan wird Tetrahydrofuran verwendet, ansonsten wird wie in Beispiel 22 verfahren. Daten in Tabelle 4.

Beispiel 24

Anstelle von Dioxan wird 1,2-Dimethoxyethan verwendet. Auch hier ist sehr schlechte Phasentrennung bei 20 °C zu beobachten. Nach Zugabe von 700 ml Wasser wird eine untere Phase von 1 400 ml abgetrennt. Mit der oberen Phase wird wie in Beispiel 22 verfahren. Daten in Tabelle 4.

Beispiel 25

Anstelle von Acetonitril wird Aceton verwendet. Ansonsten wird wie in Beispiel 21 vorgegangen. Daten in Tabelle 4.

Beispiel 26

Anstelle von Acetonitril wird Methylethylketon verwendet. Ansonsten wird wie in Beispiel 21 vorgegangen. Daten in Tabelle 4.

Beispiel 27 (kontinuierliche Vermischung)

Komponente A : 40 kg NCO-Prepolymer aus Beispiel 1 (50 °C)
Komponente B : 120 kg Dimethylformamid, 20 kg Wasser und 400 g Kaliumacetat (80 °C)

Die Vermischung von A und B wird mit einer kontinuierlich arbeitenden Maschine vorgenommen, wie sie in DE-A 3 131 252, Beispiel 16 beschrieben wurde. Innerhalb 30 Minuten werden A und B im Gewichtsverhältnis 1 : 3,5 unter Gasentwicklung vermischt und in einen Kessel gefördert, in dem das Reaktionsgemisch noch weitere 30 Minuten auf 90 °C erhitzt wird. Danach wird Wasser und Dimethylformamid unter Anlegen von Vakuum (zuerst 700-100 mbar, dann 0,9 mbar) bei 100 °C abdestilliert. Vom 40 °C warmen Produkt wird das Salz durch Filtration mit einer Drucknutsche abgetrennt. Daten in Tabelle 4.

(Siehe Tabelle 4 Seite 18 f.)

Tabelle 4

Daten der in Beispielen 21-27 hergestellten Polyamine

| | Beispiele | | | | | | |
|---|---|---|---|---|---|---|---|
| | 21 | 22 | 23 | 24 | 25 | 26 | 27 |
| Ausbeute (%) | 99 | 76 | 81 | 67 | 80 | 78 | 98 |
| prim. Stickstoff (%)[1] | 0,99 | 0,97 | 0,98 | 1,0 | 1,0 | 0,85 | 1,1 |
| Ges.-Stickstoff (%)[2] | 2,50 | 2,51 | 2,41 | 2,46 | 2,44 | 2,48 | 2,42 |
| NH-Zahl (mg KOH/g)[3] | 39,8 | 38,8 | 39,1 | 39,9 | 40,0 | 34,2 | 43,8 |
| NH-Zahl (mg KOH/g)[4] | 40,3 | 39,1 | 38,7 | 40,0 | 40,1 | 35,3 | 44,5 |
| Wasser-Gehalt (%)[5] | 0,08 | 0,05 | 0,31 | 0,25 | 0,14 | 0,27 | 0,05 |
| Viskosität $\eta^{75}$ (mPa.s) | 470 | 483 | 491 | 465 | 430 | 620 | 364 |

[1]-[5] s. Tabelle 1.

Beispiele 28-35

In den Beispielen werden weitere NCO-Prepolymere und andere NCO-Verbindungen in Polyamine umgewandelt.

Beispiel 28

In einer 90 °C heißen Mischung aus 1 500 ml Dimethylformamid, 250 ml Wasser und 49,7 g Kaliumhydrogencarbonat, in der das $KHCO_3$ zum größten Teil ungelöst vorliegt, werden 500 g eines NCO-Prepolymers mit einem NCO-Wert von 6,6 % innerhalb 30 Minuten zugegeben. Dabei werden 14,3 l Kohlendioxid frei, die Reaktionsmischung ist unmittelbar nach Beendigung der Zugabe NCO-frei. Das NCO-Prepolymer wurde aus einem Polytetramethylenglykoletherdiol der OH-Zahl 112 und 2,4-Diisocyanatotoluol im Molverhältnis 1 : 2 durch Vereinigung beider Komponenten bei Raumtemperatur und 4-stündiges Erhitzen auf 80 °C hergestellt. Die bei der Reaktionsmischung einphasige Reaktionsmischung ergibt beim Abkühlen auf 20 °C zwei Phasen, von denen die obere, 1 480 ml umfassende wäßrige DMF-Phase abgetrennt und verworfen wird. Das Kaliumhydrogencarbonat wurde vor der Phasentrennung heiß abfiltriert. Die untere Phase wird bei 20 mbar/100 °C und dann 0,5 mbar/100 °C von Resten flüchtiger Stoffe und dann von Salzresten filtrativ befreit. Daten in Tabelle 5.

Beispiel 29

Zu einer 90 °C heißen Mischung aus 1 500 ml Dimethylformamid, 500 ml Wasser und 84,3 g Kaliumhydrogencarbonat, welches in dieser Mischung zum größten Teil ungelöst vorliegt, werden innerhalb 20 Minuten 500 g eines 50 °C warmen NCO-Prepolymers mit einem NCO-Gehalt von 11,2 % zugegeben. Aus der heißen Reaktionsmischung werden 78 g $KHCO_3$ abfiltriert und zur abgekühlten, immer noch einphasigen Reaktionsmischung 600 ml Wasser hinzugegeben, worauf Phasentrennung eintritt. Die obere, 2 200 ml umfassende Phase wird abgetrennt und verworfen. Die untere Phase wird weiter wie in Beispiel 28 behandelt. Daten in Tabelle 5.

Das in Beispiel 29 verwendete NCO-Prepolymer wurde aus einem Polypropylenglykol der OH-Zahl 265 und 2,4-Diisocyanatotoluol im Molverhältnis 1 : 2 durch Vereinigung beider Komponenten bei Raumtemperatur und 4-stündiges Erhitzen auf 80 °C hergestellt.

Beispiel 30

Zu einer 90 °C heißen Mischung aus 1 500 ml Dimethylformamid, 400 ml Wasser und 46 g Kaliumhydrogencarbonat, welches in dieser Mischung zum größten Teil ungelöst vorliegt, werden innerhalb 20 Minuten unter intensivem Rühren und von $CO_2$-Entwicklung begleitet, 500 g eines 50 °C warmen NCO-Prepolymeren mit einem NCO-Wert von 5,6 % gegeben. Dieses NCO-Prepolymer wurde aus einem Polypropylenglykol der OH-Zahl 112 und einem ca. 1 : 1-Gemisch aus 4,4'-Diisocyanatodiphenylmethan und 2,4'-Diisocyanatodiphenylmethan im Molverhältnis 1 : 2 durch Vereinigung beider

Komponenten bei Raumtemperatur und 4-stündiges Erhitzen auf 80 °C hergestellt. Im übrigen wird wie in Beispiel 28 verfahren. Daten in Tabelle 5.

Beispiel 31

Zu einer 90 °C heißen Mischung aus 1 500 ml Dimethylformamid, 200 ml Wasser und 20 g Kaliumhydrogencarbonat, welches in dieser Mischung zum größten Teil ungelöst vorliegt, werden innerhalb 20 Minuten unter intensivem Rühren und unter ständiger $CO_2$-Entwicklung 600 g eines NCO-Prepolymers mit einem NCO-Wert von 3,2 % gegeben. Dieses NCO-Prepolymer wurde aus einem Polypropylenglykol der OH-Zahl 56 und einem ca. 1 : 1-Gemisch aus 4,4'-Diisocyanatodiphenylmethan und 2,4'-Diisocyanatodiphenylmethan im Molverhältnis (OH : NCO) 1 : 2 durch Vereinigung beider Komponenten bei Raumtemperatur und 4-stündiges Erhitzen auf 40 °C hergestellt. Im übrigen wird wie in Beispiel 28 verfahren. Daten in Tabelle 5.

Beispiel 32

Zu einer 85 °C heißen Mischung aus 1 500 ml Dimethylformamid, 150 ml Wasser und 20 g Natriumcarbonat, das in dieser Mischung zum größten Teil ungelöst vorliegt, werden innerhalb 10 Minuten unter intensivem Rühren und von gleichmäßiger Kohlendioxid-Entwicklung begleitet, 750 g eines NCO-Prepolymers mit einem NCO-Wert von 2,0 % gegeben. Dieses NCO-Prepolymer wurde aus einem aus einem auf Propylenglykol-1,2 gestarteten Polyetherpolyol der OH-Zahl 28 aus 80 % Polyoxypropyleneinheiten und 20 % Polyoxyethyleneinheiten (endständig) und 2,4-Diisocyanatotoluol im Molverhältnis 1 : 2 durch Vereinigung beider Komponenten bei Raumtemperatur und 4-stüniges Erhietzen auf 80 °C hergestellt. Im übrigen wird wie in Beispiel 28 verfahren. Daten in Tabelle 5.

Beispiel 33

Zu einer am Rückfluß gehaltenen Mischung aus 1 500 ml Dimethylformamid, 200 ml Wasser und 30 g Kaliumcarbonat, das zum größten Teil ungelöst vorliegt, werden innerhalb 25 Minuten unter intensivem Rühren 500 g eines NCO-Prepolymers mit dem NCO-Gehalt von 3,3 % NCO gegeben. Dabei entweicht ein gleichmäßiger Kohlendioxid-Strom. Das eingesetzte NCO-Prepolymer wurde aus einem Polypropylenglykol der OH-Zahl 56 und 2,4'-Diisocyanatodiphenylsulfid im Molverhältnis 1 : 2 durch Vereinigung beider Komponenten bei Raumtemperatur und 4-stündiges Erhitzen auf 80 °C hergestellt. Im übrigen wird wie in Beispiel 28 verfahren. Daten in Tabelle 5.

Beispiel 34

Zu einer 90 °C heißen Mischung aus 1 500 ml Dimethylformamid, 150 ml Wasser und 30 g Natriumhydrogencarbonat, das in der Mischung zum größten Teil ungelöst vorliegt, werden innerhalb 20 Minuten 500 g eines NCO-Prepolymers mit einem NCO-Wert von 1,9 % gegeben. Während der von intensivem Rühren begleiteten NCO-Prepolymer-Zugabe entweicht ein gleichmäßiger Kohlendioxid-Strom. Das eingesetzte NCO-Prepolymer wurde an einem Polyethertriol der OH-Zahl 28, das aus einem auf Trimethylolpropan gestarteten Polyoxypropylenblock von 83 % und einem 17 % ausmachenden Polyoxyethylenblock besteht und 2,4-Diisocyanatotoluol im Molverhältnis 1 : 2 durch Vereinigung beider Komponenten bei Raumtemperatur und 4-stündiges Erhitzen auf 80 °C. Im übrigen wird wie in Beispiel 28 verfahren. Daten in Tabelle 5.

Beispiel 35

Zu einer 90 °C heißen 90 °C heißen Mischung aus 1 400 ml Dimethylformamid, 350 ml Wasser und 39 g Kaliumhydrogencarbonat werden innerhalb 30 Minuten 1,4 l einer Lösung von 700 g eines Trimerisats von 2,4-Diisocyanatotoluol (NCO-Wert 20,3 %, « Desmodur IL » R der Bayer AG) in 700 ml Dioxan zugegeben. Dabei wird intensiv gerührt. Es entweicht ein starkr Kohlendioxidstrom. Die unmittelbar nach Beendigung der NCO-Prepolymer-Zugabe NCO-freie Reaktionsmischung wird heiß durch Filtration vom Kaliumhydrogencarbonat befreit. Das auch bei 20 °C einphasige Filtrat wird einer Destillation bei vermindertem Druck unterworfen, darauf resultiert ein hartsprödes Material, das über 100 °C erweicht, in Ethanol un- und in DMF löslich ist. Ein IR-Spektrum zeigt starke Isocyanurat-Banden und Amin-Banden. Daten in Tabelle 5.

(Siehe Tabelle 5 Seite 20 f.)

Tabelle 5

Daten der in den Beispielen 28-35 erhaltenen Polyamine

Beispiele 28-35

| | 28 | 29 | 30 | 31 | 32 | 33 | 34 | 35 |
|---|---|---|---|---|---|---|---|---|
| Ausbeute (% d.Th.) | 97 | 86 | 94 | 94 | 93 | 95 | 91 | 99 |
| prim. Stickstoff (%)[1] | 1,110 | 2,32 | 1,45 | 1,0 | 0,45 | 0,94 | 0,41 | 7,04 |
| Ges.-Stickstoff (%)[2] | 4,41 | 8,14 | 3,80 | 2,58 | 1,36 | 2,34 | 1,39 | 16,0 |
| NH-Zahl (mg KOH/g)[3] | 46,4 | 92,8 | 58,0 | 40,0 | 18,0 | 37,8 | 16,4 | 28,2 |
| NH-Zahl (mg KOH/g)[4] | 46,4 | 93,1 | 61,0 | 39,3 | 19,3 | 36,7 | 16,3 | 28,6 |
| Wasser-Gehalt (%)[5] | 0,41 | 0,26 | 0,14 | 0,17 | 0,06 | 0,17 | 0,23 | 0,4 |
| Viskosität (mPa.s/75°C) | 1900 | 17500 | 912 | 396 | 320 | 283 | 398 | -[6] |

[1]-[5] s. Tabelle 1
[6] Harz

Beispiele 36-40

In den Beispielen 2-35 wurden aus NCO-Prepolymeren, aus anionischen Polyisocyanaten und Polyetherpolyolen sowie aus NCO-Addukt aus einem aromatischen Polyisocyanat die entsprechenden Amine hergestellt.
In den Beispielen 36-40 werden Prepolymere aus Polyesterpolyolen und aromatischen Polyisocyanaten in Amin umgewandelt.

Beispiel 36

Zu einer 90 °C heißen Mischung aus 2,7 kg Dimethylformamid, 450 ml Wasser und 50 g Kaliumhydrogencarbonat, das nicht vollständig gelöst ist, werden unter intensivem Rühren und unter $CO_2$-Freisetzung 900 g eines 50 °C warmen NCO-Prepolymers des NCO-Wertes 3,0 in 45 Minuten gegeben. Dieses NCO-Prepolymer wurde aus einem Polyester aus Adipinsäure, Ethylenglykol und Butandiol-1,4 (Molverhältnis Ethylenglykol/Butandiol-1,4 = 1 : 1) und 2,4-Diisocyanatotoluol im Molverhältnis 1 : 2 durch Zugabe von flüssigem Polyester zu vorgelegtem, 80 °C warmen Polyisocyanat und anschließendem 3-stündigem Erhitzen des Gemischs auf 80 °C erhalten. Aus der auf 20 °C abgekühlten Reaktionsmischung wurde das Kaliumhydrogencarbonat abfiltriert, es trat keine Phasentrennung ein. Das einphasige Filtrat wird bei vermindertem Druck von Lösungsmittel befreit und zum Schluß nochmals filtriert. Daten in Tabelle 6.

Beispiel 37

Zu einer 90 °C heißen Mischung aus 2,5 l Dimethylformamid, 500 ml Wasser und 56 g Kaliumhydrogencarbonat, das nicht vollständig gelöst vorliegt, werden unter intensivem Rühren und unter $CO_2$-Freisetzung 1,5 kg einer Mischung aus einem NCO-Prepolymer mit NCO-Wert von 3,4 % und 500 g Dioxan gegeben. Dieses NCO-Prepolymer wurde aus dem Polyester aus Beispiel 36 und einem Diisocyanat aus Beispiel 38 im Molverhältnis 1 : 2 auf die in Beispiel 38 geschilderte Art hergestellt. Auch die Aufarbeitung des NCO-freien Reaktionsgemisches wird wie in Beispiel 36 vorgenommen. Daten in Tabelle 6.

Beispiel 38

Zu einer 90 °C heißen Mischung aus 1,5 l Dimethylformamid, 250 ml Wasser und 28 g Kaliumhydrogencarbonat, das nicht vollständig gelöst ist, werden unter intensivem Rühren und unter $CO_2$-Freisetzung innerhalb 60 Minuten 500 g eines 70 °C warmen NCO-Prepolymers gegeben. Dieses NCO-Prepolymer, das einen NCO-Wert von 3,8 % NCO-aufweist, wurde durch Erhitzen des Polyesters aus Adipinsäure, Ethylenglykol und Butandiol-1,4 (Molverhältnis Ethylenglykol/Butandiol-1,4 = 4 : 7) mit OH-Zahl 56 mit einem molaren überschuß eines Gemisches aus 65 % 2,4-Diisocyanatotoluol und 35 % 2,6-Diisocyanatotoluol für 4 Stunden auf 80 °C und anschließende destillative Entfernung des überschüssigen Diisocyanats mit einem sog. Dünnschichtverdampfer hergestellt. Die Aufarbeitung des Reaktionsgemisches erfolgt wie in Beispiel 36. Daten in Tabelle 6.

Beispiel 39

Es wird der gleiche Ansatz wie in Beispiel 36 vorgenommen, jedoch nach Beendigung der Zugabe des NCO-Prepolymeren filtriert und auf 20 °C abgekphlt. Auf Zugabe von 150 ml Wasser erfolgt Phasentrennung. Die obere Phase von 1 470 ml wird abgetrennt und verworfen. Die untere Phase wird bei 100 °C/20 mbar und 100 °C/1 mbar destillativ vom Solvens befreit, danach wird nochmals heiß filtriert. Das Produkt ist bei Raumtemperatur fest. Daten in Tabelle 6.

Beispiel 40

Zu einer 80 °C heißen Mischung aus 3 l Dimethylformamid, 500 ml Wasser und 56 g Kaliumhydrogencarbonat (z. T. ungelöst) werden unter intensivem Rühren und $CO_2$-Entwicklung innerhalb 60 Minuten 1,2 kg einer Mischung aus 1 kg eines NCO-Prepolymers mit einem NCO-Gehalt von 3,3 % und 200 g Dioxan gegeben. Das NCO-Prepolymer wurde hergestellt durch Umsetzung von einem Polyester aus Adipinsäure, Trimethylolpropan und Diethylenglykol (OH-Zahl 50, Funktionalität ~ 2,5) und 2,4-Diisocyanatotoluol im Molverhältnis 1 : 2. Dabei wurden die Komponenten bei 20 °C vereinigt und dann auf 80 °C aufgeheizt und 4 Stunden bei dieser Temperatur gehalten. Übrige Aufarbeitung erfolgt wie in Beispiel 36. Daten in Tabelle 6.

(Siehe Tabelle 6 Seite 22 f.)

Tabelle 6

Daten der in Beispielen 36-40 hergestellten Polyamine

Beispiele 36-40

| | 36 | 37 | 38 | 39 | 40 |
|---|---|---|---|---|---|
| Ausbeute (% d.Th.) | 98 | 97 | 99 | 82 | 98 |
| prim. Stickstoff (%)[1] | 0,91 | 0,76 | 1,03 | 0,85 | 0,98 |
| Ges.-Stickstoff (%)[2] | 2,55 | 2,34 | 2,41 | 2,36 | 2,65 |
| NH-Zahl (mg KOH/g)[3] | 36,4 | 30,4 | 41,1 | 33,9 | 39,2 |
| NH-Zahl (mg KOH/g)[4] | 37,4 | 32,7 | 40,1 | 33,4 | 36,7 |
| Wassergehalt (%)[5] | 0,05 | 0,16 | 0,18 | 0,12 | 0,28 |
| Viskosität[6] | - | - | - | - | - |

[1]-[5]) s. Tabelle 1

[6]) sämtliche Polyesteramine nach Beispielen 36-40 stellen sehr hochviskose oder feste Verbindungen dar (bei Raumtemperatur).

Beispiele 41-46

In diesen Beispielen werden aliphatische Polyamine aus Prepolymeren aus aliphatischen Polyisocyanaten und Polyetherpolyolen bzw. aus NCO-Addukten aus aliphatischen Polyisocyanaten hergestellt.

Beispiel 41

Zu einer 90 °C heißen Mischung aus 1 500 ml Dimethylformamid, 500 ml Wasser und 110 g Kaliumacetat werden in 60 min. 500 g eines gedünnschichteten NCO-Prepolymers aus 1,6-Diisocyanatohexan und Dipropylenglykol mit einem NCO-Gehalt von 14,0 % unter intensivem Rühren gegeben. Die auf 20 °C abgekühlte Reaktionsmischung, die nach Ende der Zugabe sofort NCO-frei ist, wird zur Abtrennung des Salzes filtriert. Nach der Abdestillation des Lösungsmittels bei 100 °C/20 mbar und 100 °C/1 mbar wird nochmals filtriert. Daten in Tabelle 7.

Beispiel 42

Zu einer 90 °C heißen Mischung aus 1 500 ml Dimethylformamid, 200 g Wasser und 50 g Kaliumcarbonat werden 500 g eines gedünnschichteten NCO-Prepolymers der NCO-Zahl 5,0 aus 1,6-Diisocyanatohexan und Polypropylenglykol der OH-Zahl 112 in 45 min. unter intensivem Rühren gegeben. Aufarbeitung erfolgt wie in Beispiel 41. Daten in Tabelle 7.

Beispiel 43

Zu einer 90 °C heißen Mischung aus 1 500 ml Dimethylformamid, 150 g Wasser und 30 g Kaliumhydrogencarbonat werden in 30 min. 500 g eines gedünnschichteten NCO-Prepolymers aus Isophorondiisocyanat und einem Polyetherthiol, das ein auf Glyzerin gestartetes Polyoxypropylentriol der OH-Zahl 35 darstellt, mit einem NCO-Wert von 2,0 unter intensivem Rühren gegeben. Aufarbeitung erfolgt wie in Beispiel 41. Daten in Tabelle 7.

Beispiel 44

Zu einer 80 °C heißen Mischung aus 1 500 ml Dimethylformamid, 550 g Wasser und 100 g Kaliumhydrogencarbonat werden in 60 min. 500 g eines 1,6-Diisocyanatohexan-Biurets der NCO-Zahl 21,3 % unter intensivem Rühren gegeben. Aufarbeitung erfolgt wie in Beispiel 41. Daten in Tabelle 7.

Beispiel 45

Zu einer 90 °C heißen Mischung aus 1 500 ml Dimethylformamid, 500 g Wasser und 100 g Kaliumhydrogencarbonat werden in 60 min. 500 g eines 50 °C warmen durch Trimerisierung von 1,6-Diisocyanatohexan gewonnenen Addukts mit dem NCO-Wert 18,7 % unter intensivem Rühren gegeben. Aufarbeitung erfolgt wie in Beispiel 41. Daten in Tabelle 7.

Beispiel 46

Zu einer 90 °C heißen Mischung aus 1 500 ml Dimethylformamid, 500 g Wasser und 100 g Natriumhydrogencarbonat werden in 60 min. 500 g eines auf 60 °C erwärmten, gedünnschichteten NCO-Prepolymers aus 1,6-Diisocyanatohexan und Trimethylolpropan des NCO-Gehalte 16,8 % unter intensivem Rühren gegeben. Aufarbeitung erfolgt wie in Beispiel 41. Daten in Tabelle 7.

Tabelle 7

Daten der in Beispielen 41/46 erhaltenen Polyamine

Beispiele 41-46

| | 41 | 42 | 43 | 44 | 45 | 46 |
|---|---|---|---|---|---|---|
| Ausbeute (% d.Th.) | 99 | 99 | 98 | 73 | 75 | 57 |
| prim. Stickstoff (%)[1)] | 4,50 | 1,57 | 0,56 | 6,75 | 3,19 | 4,46 |
| Ges.-Stickstoff (%)[2)] | 9,99 | 3,41 | 1,45 | 16,4 | 18,7 | 14,0 |
| NH-Zahl (mg KOH/g)[3)] | 180 | 62,8 | 22,4 | 270 | 127,6 | 178,4 |
| NH-Zahl (mg KOH/g)[4)] | 184 | 63,1 | 22,5 | 293 | 131,4 | 181 |
| Wassergehalt (%)[5)] | 0,53 | 0,05 | 0,11 | 0,14 | 0,24 | 0,25 |
| Viskosität (mPa.s/75 °C) | 630 | 590 | - | - | - | - |

[1)]-[5)] s. Tabelle 1.

Beispiele 47-51

In diesen Beispielen wird die umgekehrte Vorgehensweise beschrieben, d. h. das Prepolymer wird vorgelegt und das basisch-katalytische Medium zugegeben. Die Aufarbeitung erfolgt jeweils wie in Beispiel 47 angegeben. Ergebnisse siehe Tabelle 8.

Beispiel 47

Vorgelegt werden 1 000 g eines NCO-Prepolymers mit einem NCO-Gehalt von 35 Gew.-%. Dieses NCO-Prepolymer wurde aus den gleichen Ausgangsverbindungen und auf die gleiche Weise wie in Beispiel 1 hergestellt.

Innerhalb 5 min wurden bei einer Innentemperatur von 90 °C eine Mischung aus 3 l Dimethylformamid, 500 ml Wasser und 56 g Kaliumhydrogencarbonat zugegeben und weiter 5 min bei dieser Temperatur nachgerührt. Dabei entwichen bis zu einer zugegebenen Menge von 400 ml DMF/Wasser/$KHCO_3$-Mischung insgesamt 10 l $CO_2$, danach nichts mehr. Nach den 5 min Nachrührzeit wird das zum größten Teil ungelöst vorliegende Kaliumhydrogencarbonat abfiltriert, das Filtrat wie üblich eingeengt und der geringe Salzrest nochmals abfiltriert.

Beispiel 48

Es wird wie in Beispiel 47 vorgegangen, jedoch wird die Zugabezeit auf 10 min verdoppelt. Bei einer zugegebenen Menge von ca. 400 ml Gemisch sind ca. 15,6 l $CO_2$ freigeworden, danach entsteht nichts mehr.

Beispiel 49

Vorgelegt wird 1 kg des Prepolymers aus Beispiel 47. Bei einer Innentemperatur von 90 °C wird innerhalb 5 min eine Mischung aus 440 ml Dimethylformamid/66,4 g Wasser und 7,44 g Kaliumhydrogencarbonat zugegeben und 5 min nachgerührt. Es entwickelte sich insgesamt 15,6 l Kohlendioxyd.

Beispiel 50

Vorgelegt wird 1 kg des Prepolymers aus Beispiel 34. Innerhalb 5 min wird bei einer Innentemperatur von 90 °C ein 90 °C heißes Gemisch aus 3 l Dimethylformamid/500 ml Wasser und 56 Kaliumhydrogencarbonat zugegeben. Es entwickeln sich insgesamt nur 10 l Kohlendioxyd ; diese Kohlendioxyd-Entwicklung ist nach ca. 400 ml zugegebener Mischung beendet.

Beispiel 51

Vorgelegt wird 1 kg des Prepolymers aus Beispiel 47. Bei einer Innentemperatur von 90 °C wird eine Mischung aus 2 l Dimethylformamid, 333 g Wasser und 37,6 g Kaliumhydrogencarbonat innerhalb von 5 min zugegeben. Es entwickeln sich insgesamt 9,6 l Kohlendioxyd.

Tabelle 8

| Beispiel | 47 | 48 | 49 | 50 | 51 |
|---|---|---|---|---|---|
| Ausbeute (%) | 98 | 99 | 99 | 99 | 100 |
| prim. Stickstoff (%)[1)] | 0,87 | 0,64 | 0,64 | 0,47 | 0,81 |
| Ges.-Stickstoff (%)[2)] | 2,40 | 2,50 | 2,46 | 1,31 | 2,47 |
| NH-Zahl (mgKOH/g)[3)] | 34,6 | 25,7 | 25,6 | 18,7 | 32,2 |
| NH-Zahl (mg KOH/g)[4)] | 33,0 | 26,7 | 26,1 | 18,8 | 31,9 |
| Wasser-Gehalt (%)[5)] | 0,17 | 0,17 | 0,31 | 0,18 | 0,09 |
| Viskosität (mPa.s/75°C) | 520 | 930 | 800 | 410 | 683 |

[1)]-[5)] siehe Tabelle 1.

**Ansprüche**

1. Verfahren zur Herstellung von Polyaminen mit primären Aminogruppen durch Hydrolyse von NCO-Gruppen aufweisenden Verbindungen in wäßrigen alkalischen Medien, dadurch gekennzeichnet, daß man in einem Einstufen-Verfahren

a) NCO-Gruppen aufweisende Verbindungen mit einem Gehalt von 0,5 bis 40 Gew.-% NCO

b) mit überschüssigen Mengen an Wasser von mindestens 2 Äquivalenten Wasser pro Äquivalent NCO-Gruppe in a),

c) in Gegenwart von Alkali-Carbonaten oder Hydrogencarbonaten und/oder Alkali- und Erdalkalisalzen von Mono- oder Polycarbonsäuren, in Mengen von 0,01 bis 25 Gew.-%

d) in Gegenwart von wassermischbaren, polaren Lösungsmitteln in Mengen von ≥ 10 Gew.-Teilen d), bezogen auf 100 Teile a),

unter Aufrechterhaltung einer im wesentlichen homogenen Reaktionsmischung bei einer Temperatur zwischen 50 und 165 °C hydrolysiert.

2. Verfahren nach Anspruch 1, dadurch gekennzeichnet, daß man als Katalysatoren c) Alkalicarbonate und/oder Alkalihydrogencarbonate und/oder Alkali- oder Erdalkalisalze von aliphatischen Monocarbonsäuren mit 1 bis 10 C-Atomen verwendet.

3. Verfahren nach Ansprüchen 1 und 2, dadurch gekennzeichnet, daß man die Katalysatoren in wesentlich gelöster Form verwendet.

4. Verfahren nach Ansprüchen 1 bis 3, dadurch gekennzeichnet, daß man die Hydrolyse in Gegenwart von Wasser in mindestens der 10-fach stöchiometrischen Menge, bezogen auf NCO, vornimmt.

5. Verfahren nach Ansprüchen 1 bis 4, dadurch gekennzeichnet, daß man die Hydrolyse in Gegenwart von wassermischbaren Lösungsmitteln mit Carbonsäuredialkylamid-, Lactam-, Tetraalkylharnstoff-, Sulfon-, Sulfoxid-, Phosphordialkylamid-, Nitril-, Keton- und Ether-Gruppen, mit einem Siedebereich von 56 bis 250 °C, in Mengen von ≥ 20 Gew.-Teilen d), bezogen auf 100 Teile a), vornimmt.

6. Verfahren nach Ansprüchen 1 bis 5, dadurch gekennzeichnet, daß man die Hydrolyse bei Temperaturen von 80 bis 130 °C durchführt.

7. Verfahren nach Ansprüchen 1 bis 6, dadurch gekennzeichnet, daß man als NCO-Verbindungen a) NCO-Prepolymere mit einem Gehalt von 1,5 bis 15 Gew.-% aromatisch gebundenem NCO auf Basis von

höhermolekularen, di- oder trifunktionellen Polyether-, Polyester-, Polycarbonat- und Polycaprolacton-Polyolen einsetzt.

8. Verfahren nach Ansprüchen 1 bis 7, dadurch gekennzeichnet, daß man die Hydrolyse zu den Polyaminen in einer kontinuierlichen Reaktion durchführt.

9. Polyamine, hergestellt nach Verfahren 1 bis 8 durch Einstufenhydrolyse von NCO-Verbindungen, enthaltend 0,58 bis 6,7 Gew.-% $NH_2$-Gruppen.

10. Verwendung der nach den erfindungsgemäßen Verfahren 1 bis 8 zugänglichen Polyamine als Reaktionskomponente beim Aufbau von Polyurethanen.

**Claims**

1. Process for the preparation of polyamines containing primary amino groups by the hydrolysis of compounds containing NCO groups in aqueous alkali media, characterised in that, in a single stage process,

a) compounds containing NCO groups, which compounds have a content of 0.5 to 40 % by weight of NCO, are hydrolysed

b) with excess quantities of water of at least 2 equivalents of water per equivalent of NCO group in a),

c) in the presence of alkali carbonates or hydrogen carbonates and/or alkali and alkaline earth salts of mono- or polycarboxylic acids, in quantities of 0.01 to 25 % by weight

d) in the presence of water-miscible polar solvents in quantities of ⩾ 10 parts by weight of d), based on 100 parts of a),

at a temperature of between 50 and 165 °C, the reaction mixture being kept substantially homogeneous.

2. Process according to Claim 1, characterised in that alkali carbonates and/or alkali hydrogen carbonates and/or alkali or alkaline earth salts of aliphatic monocarboxylic acids containing 1 to 10 C atoms are used as the catalysts c).

3. Process according to Claims 1 and 2, characterised in that the catalysts are used in a substantially dissolved form.

4. Process according to Claims 1 to 3, characterised in that the hydrolysis is carried out in the presence of water in at least 10 times the stoichiometric quantity, based on NCO.

5. Process according to Claims 1 to 4, characterised in that the hydrolysis is carried out in the presence of water-miscible solvents containing carboxylic acid dialkyl amide, lactam, tetraalkyl urea, sulphone, sulphoxide, phosphoric dialkylamide, nitrile, ketone and ether groups, and having a boiling range of 56 to 250 °C, in quantities of ⩾ 20 parts by weight of d), based on 100 parts of a).

6. Process according to Claims 1 to 5, characterised in that the hydrolysis is carried out at temperatures of 80 to 130 °C.

7. Process according to Claims 1 to 6, characterised in that NCO prepolymers containing 1.5 to 15 % by weight of aromatically bound NCO and based on relatively high molecular weight di- or trifunctional polyether, polyester, polycarbonate and polycaprolactone polyols are used as the NCO compounds a).

8. Process according to Claims 1 to 7, characterised in that the hydrolysis to give the polyamines is carried out in a continuous reaction.

9. Polyamines, prepared by processes 1 to 8 by the single stage hydrolysis of NCO compounds and containing 0.58 to 6.7 % by weight of $NH_2$ groups.

10. Use of the polyamines obtainable by processes 1 to 8 according to the invention, as a reaction component in the synthesis of polyurethanes.

**Revendications**

1. Procédé de préparation de polyamines comportant des groupes amino primaires par hydrolyse de composés comportant des groupes NCO dans des milieux alcalins aqueux, caractérisé en ce que, dans un procédé à une étape, on hydrolyse

a) des composés comportant des groupes NCO et ayant une teneur en NCO de 0,5 à 40 % en poids,

b) avec des quantités excédentaires d'eau d'au moins 2 équivalents d'eau par équivalent de groupe NCO de a)

c) en présence de carbonates ou d'hydrogénocarbonates alcalins et/ou de sels alcalins et alcalinoterreux d'acides mono- ou polycarboxyliques, en quantités de 0,01 à 25 % en poids,

d) en présence de solvants polaires miscibles à l'eau en quantités de ⩾ 10 parties en poids de d), calculé sur 100 parties de a),

tout en maintenant un mélange réactionnel essentiellement homogène à une température comprise entre 50 et 165 °C.

2. Procédé suivant la revendication 1, caractérisé en ce que, comme catalyseurs c), on utilise des carbonates alcalins et/ou des hydrogénocarbonates alcalins et/ou des sels alcalins ou alcalino-terreux d'acides monocarboxyliques aliphatiques contenant 1 à 10 atomes de carbone.

3. Procédé suivant les revendications 1 et 2, caractérisé en ce qu'on utilise les catalyseurs sous forme essentiellement dissoute.

4. Procédé suivant les revendications 1 à 3, caractérisé en ce qu'on effectue l'hydrolyse en présence d'eau dans au moins la quantité 10 fois stœchiométrique, calculé sur NCO.

5. Procédé suivant les revendications 1 à 4, caractérisé en ce qu'on effectue l'hydrolyse en présence de solvants miscibles à l'eau comportant des groupes dialkylamide d'acide carboxylique, lactame, tétralkylurée, sulfone, sulfoxide, dialkylamide de phosphore, nitrile, cétone et éther, d'un point d'ébullition se situant entre 56 et 250 °C, en quantités de ≥ 20 parties en poids de d), calculé sur 100 parties de a).

6. Procédé suivant les revendications 1 à 5, caractérisé en ce qu'on effectue l'hydrolyse à des températures de 80 à 130 °C.

7. Procédé suivant les revendications 1 à à 6 caractérisé en ce que, comme composés de NCO a), on utilise des prépolymères de NCO ayant une teneur de 1,5 à 15 % en poids de NCO à liaison aromatique, à base de polyéther-, polyester-, polycarbonate- et polycaprolactone-polyols difonctionnels ou trifonctionnels de poids moléculaire très élevé.

8. Procédé suivant les revendications 1 à 7, caractérisé en ce qu'on effectue l'hydrolyse en polyamines dans une réaction continue.

9. Polyamines préparées par le procédé suivant les revendications 1 à 8 par hydrolyse en une étape de composés de NCO, contenant 0,58 à 6,7 % en poids de groupes $NH_2$.

10. Utilisation des polyamines obtenues par le procédé des revendications 1 à 8 suivant l'invention comme composants réactionnels dans la structuration des polyuréthanes.